# EUROPÄISCHE PATENTSCHRIFT

(11) **EP 3 013 492 B1**
(45) Veröffentlichungstag und Bekanntmachung des Hinweises auf die Patenterteilung: **04.08.2021**
(21) Anmeldenummer: 14734042.6
(22) Anmeldetag: 17.06.2014
(51) Int. Cl.: B21D 5/04, B21D 43/10

(54) **HANDHABUNGSVORRICHTUNG UND BIEGEANLAGE**
HANDLING DEVICE AND BENDING INSTALLATION
DISPOSITIF DE MANIPULATION ET INSTALLATION DE PLIAGE

(30) Priorität: 27.06.2013 DE 102013106764
(43) Veröffentlichungstag der Anmeldung: 04.05.2016
(73) Patentinhaber: RAS Reinhardt Maschinenbau GmbH, 71065 Sindelfingen (DE)
(72) Erfinder: GRÜNEWALD, Stephan, 71139 Ehningen (DE); HENTSCH, Jürgen, 71263 Weil der Stadt (DE); KÖHLER, Joachim, 71134 Aidlingen (DE); WILLMANN, Jochen, 71149 Bondorf (DE)
(74) Vertreter: Hoeger, Stellrecht & Partner Patentanwälte mbB
(86) Internationale Anmeldenummer: PCT/EP2014/062733
(87) Internationale Veröffentlichungsnummer: WO 2014/206817

(56) Entgegenhaltungen:
- EP-A1- 0 354 559
- EP-A1- 0 742 054
- DE-A1-102004 048 036
- JP-A- H1 034 241
- None

## Beschreibung

Die Erfindung betrifft eine Handhabungsvorrichtung zum Einlegen von Biegeteilen in eine Biegevorrichtung zum Biegen derselben um mindestens eine Biegekante, wobei mit der Handhabungsvorrichtung das Biegeteil zwischen einer Biegeteilaufnahmestellung auf der Vorlagefläche und einer Biegeteileinlegestellung der Biegevorrichtung bewegbar ist, wobei die Handhabungsvorrichtung eine in einer Längsrichtung langgestreckt ausgebildete Halteeinheit mit mindestens einem Halteelement aufweist, mit welchem das auf der Vorlagefläche angeordnete aufzunehmende Biegeteil auf einer seiner Flachseiten durch in der Längsrichtung an mehreren aufeinanderfolgenden Orten einseitig auf die Flachseite anziehend wirkende Kräfte erfassbar ist, und die Halteeinheit ihrerseits um eine zur Längsrichtung parallele erste Schwenkachse relativ zu einer Schwenkträgereinheit verschwenkbar ist, wobei die Schwenkträgereinheit um eine zweite, parallel zur ersten Schwenkachse verlaufende Schwenkachse relativ zu einer Schwenkträgerbasis verschwenkbar ist, und wobei die Schwenkträgerbasis mittels einer Trägerbasisbewegungseinheit in Richtung quer zu der zweiten Schwenkachse bewegbar ist sowie eine Biegeanlage umfassend eine derartige Handhabungsvorrichtung und die Biegevorrichtung.

Aus der DE 10 2004 048 036 A1 sind Handhabungsvorrichtungen und Biegeanlagen mit derartigen Handhabungsvorrichtungen bekannt, wobei mit diesen bekannten Lösungen große, insbesondere langgezogene Biegeteile nicht mit der erforderlichen Präzision in die Biegevorrichtung eingelegt werden können.

Der Erfindung liegt daher die Aufgabe zugrunde, eine Handhabungsvorrichtung und eine Biegeanlage mit einer derartigen Handhabungsvorrichtung zu schaffen, bei welchen Biegeteile mit möglichst hoher Präzision in die Biegevorrichtung eingelegt und gebogen werden können.

Diese Aufgabe wird bei einer Handhabungsvorrichtung der eingangs beschriebenen Art erfindungsgemäß dadurch gelöst, dass die Schwenkträgereinheit mindestens zwei sich zu der ersten Schwenkachse erstreckende Schwenkarme aufweist, dass die Schwenkarme starr miteinander verbunden sind, dass die Schwenkarme durch einen sich zwischen diesen erstreckenden Einsatz miteinander verbunden sind, und dass insbesondere der Einsatz als eigensteifer Rahmen ausgebildet ist, und dass insbesondere die Halteeinheit mit mehreren in der Längsrichtung aufeinanderfolgend angeordneten Schwenklagerstellen an dem Einsatz um die erste Schwenkachse schwenkbar gelagert ist.

Der Vorteil der erfindungsgemäßen Lösung ist darin zu sehen, dass dadurch, dass die Halteeinheit in einer Längsrichtung langgestreckt ausgebildet ist, sich die Möglichkeit eröffnet, das Biegeteil in der Längsrichtung an mehreren aufeinanderfolgenden Orten mittels einseitig auf die Flachseite anziehend wirkenden Kräften zu erfassen und dadurch insbesondere langgestreckte Biegeteile präzise und kinematisch einfach zu handhaben und präzise in der Biegeteileinlegestellung in der Biegevorrichtung zum Biegen zu positionieren.

Dabei ist es besonders vorteilhaft, dass die Halteeinheit das aufzunehmende Biegeteil an der Flachseite in der Längsrichtung an mehreren aufeinanderfolgenden Orten abstützt.

Der Vorteil dieser Lösung ist insbesondere darin zu sehen, dass durch die mehrfache Abstützung des Biegeteils an mehren in der Längsrichtung aufeinanderfolgenden Orten die Möglichkeit besteht, das Biegeteil in mindestens einer Richtung, beispielsweise parallel zur Längsrichtung, exakt ausgerichtet aufzunehmen, exakt zu halten und exakt zu führen.

Insbesondere ist vorteilhafterweise vorgesehen, dass die Halteeinheit das aufzunehmende Biegeteil an der Flachseite in der Längsrichtung an mehreren aufeinanderfolgenden Orten, beispielsweise nahe oder an den Orten, an denen auf die Flachseite anziehend wirkende Kräfte wirksam sind, auch abstützt.

Besonders vorteilhaft ist es, wenn die Halteeinheit eine sich in der Längsrichtung streifenförmig erstreckende Anlagefläche aufweist, da durch eine derartige Anlagefläche in einfacher Weise eine Abstützung des Biegeteils an mehreren in der Längsrichtung aufeinanderfolgenden Orten möglich ist.

Unter einer streifenförmig ausgebildeten Anlagefläche ist dabei eine Fläche zu verstehen, deren Erstreckung in Längsrichtung mindestens das Zehnfache, besser mindestens das Zwanzigfache, noch besser mindestens das Fünfzigfache ihrer Erstreckung quer zu der Längsrichtung beträgt.

Die Anlagefläche kann durch in der Längsrichtung unterbrochene, insbesondere streifenförmige Flächensegmente gebildet sein.

Eine günstige Lösung sieht dabei vor, dass die Anlagefläche sich in der Längsrichtung als zusammenhängende streifenförmige Fläche erstreckt, wobei diese Fläche an den Orten, an denen Halteelemente vorgesehen sind, einen Durchbruch aufweist.

Das heißt, dass die Anlagefläche in der Lage ist, das Biegeteil in der Längsrichtung über ihre gesamte streifenförmige Erstreckung hinweg durchgehend abstützen.

Ferner ist vorzugsweise vorgesehen, dass die Halteeinheit eine an der Flachseite des aufzunehmenden Biegeteils anlegbare Anlagefläche aufweist, die von der ersten Schwenkachse einen Abstand aufweist, der einen Bruchteil des Abstandes der ersten Schwenkachse von der zweiten Schwenkachse beträgt.

Diese Lösung bietet den Vorteil, dass durch den relativ zum Abstand der ersten Schwenkachse von der zweiten Schwenkachse kleinen Abstand der Anlagefläche von der ersten Schwenkachse aufgrund der beengten Raumverhältnisse in der Biegevorrichtung im Bereich der Einspannwerkzeuge und der sich durch die Umbiegungen ergebenden Biegeteilgeometrien eine günstige Handhabung des an der Anlagefläche anliegenden Biegeteils möglich ist.

Besonders günstig ist es, wenn der Abstand der Anlagefläche von der ersten Schwenkachse kleiner ist als ein Drittel, noch besser kleiner ist als ein Fünftel, des Abstandes der ersten Schwenkachse von der zweiten Schwenkachse.

Ferner ist vorzugsweise vorgesehen, dass die Halteeinheit um die erste Schwenkachse derart verschwenkbar ist, dass eine Anlagefläche derselben in zwei um ungefähr 180° zueinander verschwenkte Stellungen jeweils parallel zu einer Mittelebene der Schwenkträgereinheit ausrichtbar ist, so dass dadurch die Möglichkeit besteht, je nach den vorzunehmenden Umbiegungen das Biegeteil auf der einen oder anderen Seite der Mittelebene der Schwenkträgereinheit zu positionieren.

Ferner ist vorzugsweise vorgesehen, dass die Halteeinheit innerhalb eines vorgegebenen Winkelbereichs in beliebigen Drehstellungen um die erste Schwenkachse positionsgesteuert oder lagegeregelt positionierbar ist.

Insbesondere ist es dabei zweckmäßig, wenn die Halteeinheit innerhalb des vorgegebenen Schwenkbereichs in beliebigen Drehstellungen positionsgesteuert oder lagegeregelt um die erste Schwenkachse relativ zur Schwenkträgereinheit positionsgesteuert oder lagegeregelt mittels einer Maschinensteuerung positionierbar ist.

Hinsichtlich der Halteeinheit und der an dieser angeordneten Halteelemente zum Erfassen des Biegeteils wurden bislang keine näheren Angaben gemacht.

So könnte vorgesehen sein, dass die Halteeinheit ein einziges Halteelement aufweist, welches sich in der Längsrichtung über die Halteeinheit erstreckt.

Besonders günstig ist es jedoch, wenn die Halteeinheit mehrere in der Längsrichtung aufeinanderfolgend angeordnete Halteelemente aufweist, wobei jedes der Halteelemente in der Lage ist, auf die eine Flachseite des Biegeteils mit einer anziehend wirkenden Kraft einzuwirken.

Diese Lösung hat den Vorteil, dass dadurch die Kraftwirkung auf das Biegeteil definierbar ist.

Insbesondere ist hierzu vorgesehen, dass die Halteelemente einzeln aktivierbar oder deaktivierbar sind, so dass durch Aktivierung der geeigneten Zahl der Halteelemente auch die Kraftwirkung auf das Biegeteil festlegbar und an dessen Ausdehnung anpassbar ist.

Insbesondere besteht die Möglichkeit, die Halteeinheit mit einer für die maximal möglichen Biegeteile vorgesehenen Erstreckung in der Längsrichtung auszubilden und auch die entsprechende Zahl von Halteelementen anzuordnen, jedoch dann die Zahl der aktiven Halteelemente an die tatsächliche Erstreckung der Biegeteile in der Längsrichtung anzupassen und insbesondere die Halteelemente zu deaktivieren, die außerhalb der Flachseite des zu erfassenden Biegeteils liegen.

Prinzipiell wäre es denkbar, mit unterschiedlichen auf die Flachseite anziehend wirkenden Kräften zu arbeiten.

So ist bei einer Lösung vorgesehen, dass ein Halteelement auf die Flachseite des Biegeteils mit magnetischen Anziehungskräften wirkt.

Eine andere vorteilhafte Lösung sieht vor, dass ein Halteelement auf die Flachseite des Biegeteils mit pneumatischen Saugkräften wirkt.

Das Einsetzen pneumatischer Saugkräfte hat dabei den Vorteil, dass diese unabhängig von dem Material des Biegeteils wirksam sind, so dass es nicht erforderlich ist, dass das Material des Biegeteils magnetisierbar ist.

Insbesondere ist in diesem Fall vorgesehen, dass das Halteelement mindestens eine Saugkammer aufweist, mit welcher pneumatische Saugkräfte erzeugbar sind.

Die Anlagefläche und die Saugkammer könnten grundsätzlich unabhängig voneinander an der Halteeinheit angeordnet sein.

Insbesondere weist dabei jede Saugkammer eine Saugkammeröffnung auf, die innerhalb der Anlagefläche liegt, so dass jede Saugkammer von einem Teilbereich der Anlagefläche umgeben ist.

Hinsichtlich der Ausbildung der Schwenkträgereinheit wurden im Zusammenhang mit der bisherigen Beschreibung der erfindungsgemäßen Lösung keine näheren Angaben gemacht.

Erfindungsgemäß ist vorgesehen, dass die Schwenkträgereinheit mindestens zwei sich zu der ersten Schwenkachse erstreckende Schwenkarme aufweist, dass die Schwenkarme starr miteinander verbunden sind, so dass eine stabile Führung der ersten Schwenkachse relativ zur zweiten Schwenkachse möglich ist, dass die Schwenkarme durch einen sich zwischen diesen erstreckenden Einsatz miteinander verbunden sind, da ein derartiger Einsatz die Stabilisierung der Schwenkarme relativ zueinander verbessert, und dass insbesondere der Einsatz als eigensteifer und insbesondere verwindungssteifer Rahmen ausgebildet ist und somit aufgrund seiner Eigensteifigkeit auch die Schwenkarme starr miteinander verbindet, und dass insbesondere die Halteeinheit mit mehreren in der Längsrichtung aufeinanderfolgend angeordneten Schwenklagerstellen an dem Einsatz um die erste Schwenkachse schwenkbar gelagert ist, so dass durch die mehrfache schwenkbare Lagerung der Halteeinheit die Halteeinheit selbst in ihrer Ausrichtung in der Längsrichtung durch den Einsatz ebenfalls stabilisiert werden kann, um eine möglichst präzise und durchbiegungsfreie Ausrichtung der Halteeinheit und somit eine entsprechend durchbiegungsfreie Ausrichtung des durch die Halteeinheit gehaltenen Biegeteils zu gewährleisten.

Hinsichtlich der Bewegung der Schwenkträgerbasis mittels der Trägerbasisbewegungseinheit wurden bislang keine näheren Angaben gemacht.

So sieht eine vorteilhafte Lösung vor, dass die Bewegung der Schwenkträgerbasis mit der Trägerbasisbewegungseinheit positionsgesteuert oder lagegeregelt mit einer Maschinensteuerung realisierbar ist, so dass auch bei dieser Bewegung eine exakte Positionierung der Halteeinheit und somit des Biegeteils relativ zur Biegevorrichtung möglich ist.

Hierzu ist vorzugsweise vorgesehen, dass die Trägerbasisbewegungseinheit mindestens eine Bewegung mit einer Komponente in Richtung parallel zu einer Einlegeebene der Biegevorrichtung realisierbar ist, um die Möglichkeit zu haben, das Biegeteil beim Einlegen in die Biegevorrichtung parallel zur Einlegeebene zu verschieben.

Ferner ist vorzugsweise vorgesehen, dass mit der Trägerbasisbewegungseinheit mindestens eine Bewegung mit einer Komponente in Richtung quer zu einer Einlegeebene der Biegevorrichtung realisierbar ist, um die Position des Biegeteils beim Einlegen in die Biegevorrichtung relativ zur Einlegeebene anpassen zu können.

Zweckmäßigerweise ist dabei vorgesehen, dass die Trägerbasisbewegungseinheit so ausgebildet ist, dass mit dieser mindestens eine lineare Bewegung quer zu der Biegekante realisierbar ist.

Die Realisierung dieser Bewegungen könnte beispielsweise ebenfalls durch eine Vorrichtung, umfassend mindestens zwei Schwenkachsen, erfolgen, wie zum Beispiel eine mindestens einen Knickarm aufweisende Vorrichtung, wobei diese Schwenkachsen, beispielsweise parallel zu der ersten und zweiten Schwenkachse verlaufen.

Aus Gründen einer exakten Positionierung hat es sich jedoch als vorteilhaft erwiesen, wenn die Trägerbasisbewegungseinheit mindestens eine Linearführung mit einem Führungsschlitten umfasst, wobei beispielsweise die Linearführung mit dem Führungsschlitten die Bewegung mit der parallel zur Einlegeebene verlaufenden Komponente ermöglicht.

Ferner sieht eine weitere vorteilhafte Lösung vor, dass die Trägerbasisbewegungseinheit mindestens eine weitere Linearführung mit einer Schlitteneinheit umfasst, wobei die weitere Linearführung mit der Schlitteneinheit vorzugsweise die Bewegung mit der Komponente quer zur Einlegeebene ermöglicht.

Eine weitere vorteilhafte Lösung der Handhabungsvorrichtung sieht vor, dass die Trägerbasisbewegungseinheit eine quer zu der zweiten Schwenkachse verlaufende Drehachse umfasst, um welche die Schwenkträgerbasis drehbar ist.

Eine derartige quer zu der zweiten Schwenkachse verlaufende Drehachse erlaubt insbesondere eine Ausrichtung der Schwenkträgerbasis einerseits relativ zu dem Biegeteil zum Aufnehmen desselben in der Biegeaufnahmestellung und andererseits relativ zur Biegevorrichtung zum Einlegen desselben in die Biegeeinlegestellung.

Besonders günstig ist es dabei, wenn die Drehachse senkrecht zur Einlegeebene verläuft, da in diesem Fall dann die Möglichkeit besteht, das Biegeteil relativ zu einer Biegekante exakt auszurichten.

Die Drehachse kann aber auch dazu verwendet werden, um eine Drehschwenkbewegung durchzuführen, die zur Übergabe des Biegeteils von der Biegeaufnahmestellung in die Biegeeinlegestellung eingesetzt werden kann.

In diesem Fall dient die Drehachse einerseits zur Ausrichtung der Halteeinheit relativ zum Biegeteil in der Biegeaufnahmestellung und andererseits zum Ausrichten des aufgenommenen Biegeteils in der Biegeeinlegestellung und zur Durchführung einer Schwenkbewegung um von der Biegeaufnahmestellung in die Biegeeinlegestellung zu kommen.

Hinsichtlich des Verlaufs der Einlegeebene wurden bislang keine näheren Angaben gemacht.

So sieht eine vorteilhafte Lösung vor, dass die Einlegeebene parallel zu einer Einspannfläche der Einspannwerkzeuge verläuft.

Die eingangs genannte Aufgabe wird ferner durch eine Biegeanlage, umfassend eine Biegevorrichtung, eine Vorlagevorrichtung und eine Handhabungsvorrichtung erfindungsgemäß dadurch gelöst, dass mit der Handhabungsvorrichtung ein Aufnehmen des Biegeteils von der Vorlagevorrichtung sowie ein mehrfaches Einlegen des aufgenommenen Biegeteils in die Biegevorrichtung zum Umbiegen eines Teilbereichs des Biegeteils erfolgt und dass die Handhabungsvorrichtung nach einem der voranstehenden Ansprüche ausgebildet ist.

Der Vorteil der erfindungsgemäßen Biegeanlage ist somit ebenfalls dadurch gegebenen, dass mit dieser ein Biegen eines insbesondere langgestreckten Biegeteils mit hoher Präzision möglich ist.

Hinsichtlich der Ausbildung der Biegevorrichtung wurden dabei keine näheren Angaben gemacht.

So sieht eine erfindungsgemäße Lösung vor, dass die Biegevorrichtung zwei Einspannwerkzeuge sowie ein Biegewerkzeug aufweist, welches zum Biegen relativ zu den Einspannwerkzeugen bewegbar ist.

Insbesondere ist dabei vorgesehen, dass mit der Biegevorrichtung ein Biegen der Teilbereiche des Biegeteils in zwei einander entgegengesetzte Biegerichtungen möglich ist.

Hinsichtlich der Ausbildung der Einspannwerkzeuge wurden dabei keine näheren Angaben gemacht.

Vorzugsweise sind dabei die Einspannwerkzeuge so ausgebildet, dass diese mit ihren Einspannflächen eine Einspannebene festlegen.

Eine besonders vorteilhafte und zweckmäßige Ausbildung der Biegevorrichtung sieht vor, dass die Biegevorrichtung als Schwenkbiegevorrichtung ausgebildet ist, da Schwenkbiegevorrichtungen robust und stabil sind sowie präzise arbeiten.

In diesem Fall ist zweckmäßigerweise das Biegewerkzeug der Schwenkbiegevorrichtung an einer um die Schwenkachse verschwenkbaren Biegewange gehalten.

Hinsichtlich der Ausbildung der Vorlagefläche wurden in diesem Zusammenhang keine näheren Angaben gemacht.

So sieht eine vorteilhafte Lösung vor, dass die Vorlagefläche durch einen Vorlagetisch gebildet ist.

Um auf dem Vorlagetisch das Biegeteil zum Aufnehmen durch die Handhabungsvorrichtung exakt positionieren zu können, ist vorzugsweise vorgesehen, dass der Vorlagetisch Anschlagelemente für ein zuzuführendes rohes Biegeteil aufweist.

Mit diesen Anschlagelementen besteht die Möglichkeit, das rohe Biegeteil auf dem Vorlagetisch exakt in der Biegeteilaufnahmestellung zu positionieren.

Insbesondere um das Biegeteil an den Anschlagelementen anlegen zu können, sind vorzugsweise Schieberelemente vorgesehen, mit welchen ein Bewegen des Biegeteils zu den Anschlagelementen möglich ist.

Für das Handhaben des Biegeteils ist es von Vorteil, wenn das Biegeteil in einer definierten Position in der Biegeteilaufnahmestellung auf der Vorlagefläche erfassbar ist, so dass die Handhabung ohne zusätzliche Positionserfassung erfolgen kann.

Das Erfassen des Biegeteils in einer definierten Position, kann durch Ablegen des Biegeteils und Vermessen desselben auf der Vorlagefläche ermöglicht werden.

Alternativ dazu ist vorgesehen, das Biegeteil in eine zumindest in zwei Raumrichtungen definierte Position zu bewegen, welche die Biegeteilaufnahmestellung darstellt und das Biegeteil in dieser aufzunehmen.

Dabei verläuft beispielsweise die nicht exakt definierte Raumrichtung beispielsweise in Längsrichtung des Biegeteils und in der Biegeteileinlegestellung parallel zu den sich auszubildenden Biegelinien, so dass eine exakte Positionierung in dieser Raumrichtung in diesem Fall nicht erforderlich ist.

Es ist im Rahmen der Erfindung jedoch ebenfalls denkbar, das Biegeteil in der Biegeteileinlegestellung in allen drei Raumrichtungen exakt zu positionieren.

Für das Handhaben des Biegeteils ist vorzugsweise vorgesehen, dass das Biegeteil in einer definierten Position in einer Biegeteilaufnahmestellung erfasst wird, so dass die Handhabung ohne zusätzliche Positionserfassung erfolgen kann.

Das Erfassen des Biegeteils in einer definierten Position, kann durch Vermessen desselben entweder vor dem Aufnehmen oder nach dem Aufnehmen desselben erfolgen.

Alternativ dazu ist vorgesehen, das Biegeteil in eine zumindest in zwei Raumrichtungen definierte Position zu bringen, welche die Biegeteilaufnahmestellung darstellt und das Biegeteil in dieser Position aufzunehmen.

Dabei verläuft beispielsweise die nicht exakt definierte Raumrichtung in Längsrichtung des Biegeteils und in der Biegeteileinlegestellung, so dass sie parallel zu den sich auszubildenden Biegelinien liegt, so dass eine exakte Positionierung in dieser Raumrichtung in diesem Fall nicht erforderlich ist.

Es ist im Rahmen der Erfindung ebenfalls denkbar, das Biegeteil in der Biegeteileinlegestellung in allen drei Raumrichtungen exakt zu positionieren oder dessen Position zu erfassen.

Dabei ist insbesondere vorgesehen, dass das Biegeteil vor Beginn des Biegens in einem einen in einer Längsrichtung langgestreckten Teilflächenbereich einer Flachseite darstellenden Erfassungsbereich von der Handhabungsvorrichtung erfasst wird und in diesem Erfassungsbereich von der Handhabungsvorrichtung fixiert wird.

Dabei ist es beispielsweise möglich, das Biegeteil nach Biegevorgängen von der Halteeinheit zu lösen und danach, insbesondere an derselben Stelle oder einer anderen Stelle erneut zu greifen.

Besonders günstig ist es jedoch, wenn das Biegeteil in dem Erfassungsbereich von der Handhabungsvorrichtung so lange fixiert wird, bis ein Ablegen des in der Biegevorrichtung mehrfach gebogenen, insbesondere fertiggebogenen Biegeteils zum Abtransport erfolgt.

Insbesondere ist dabei vorgesehen, dass das Biegeteil in der Biegevorrichtung um relativ zueinander in einem Winkel verlaufende oder um relativ zueinander parallel verlaufende Biegelinien gebogen wird.

Ein Biegen des Biegeteils um zueinander parallel verlaufenden Biegelinien ermöglicht es insbesondere, das Biegeteil zu einem mindestens einseitig offenen Profilteil zu biegen oder auch das Biegeteil zu einem zweiseitig offenen Profilteil zu biegen.

Im Rahmen der erfindungsgemäßen Lösung ist es möglich, ein Biegeteil zunächst in einem ersten Erfassungsbereich zu halten und nach Durchführung eines Teil der vorgesehenen Biegevorgänge in einen weiteren Erfassungsbereich zu halten, oder gegebenenfalls nach weiteren Biegevorgängen im nächsten Erfassungsbereich zu halten.

Ferner ist beispielsweise vorgesehen, dass das Biegeteil von der Handhabungsvorrichtung in dem einen Teilbereich einer Flachseite bildenden Erfassungsbereich aufgenommen wird und insbesondere in dem Erfassungsbereich während der gesamten Biegevorgänge gehalten wird.

Dabei ist insbesondere vorgesehen, dass der Erfassungsbereich des Biegeteils so gelegt wird, dass die nachfolgend zu biegenden Biegelinien außerhalb des Erfassungsbereichs liegen.

Vorzugsweise erfolgt das Einlegen des Biegeteils in der Biegeteileinlegestellung durch Verschwenken der Halteeinheit um die erste Schwenkachse, Verschwenken der Schwenkträgereinheit um die zweite Schwenkachse und Bewegen der Schwenkträgerbasis durch die Trägerbasisbewegungseinheit.

Die Bewegungen des Biegeteils werden dabei vorzugsweise durch eine programmierbare Maschinensteuerung gesteuert.

Weitere Merkmale und Vorteile der Erfindung sind Gegenstand der nachfolgenden Beschreibung sowie der zeichnerischen Darstellung eines Ausführungsbeispiels einer erfindungsgemäßen Biegeanlage mit einer Biegevorrichtung, einer Handhabungsvorrichtung und einer Vorlagevorrichtung.

In der Zeichnung zeigen:
- Fig. 1: eine perspektivische Darstellung eines Ausführungsbeispiels einer erfindungsgemäßen Biegeanlage;
- Fig. 2: eine Seitenansicht des Ausführungsbeispiels der erfindungsgemäßen Biegeanlage gemäß Fig. 1;
- Fig. 3: eine vergrößerte Darstellung einer Biegevorrichtung der erfindungsgemäßen Biegeanlage im Bereich von Einspannwerkzeugen und eines Biegewerkzeugs;
- Fig. 4: einen Querschnitt durch eine erste Version einer erfindungsgemäßen Halteeinheit zum Halten eines Biegeteils;
- Fig. 5: einen Querschnitt ähnlich Fig. 4 bei Halten des Biegeteils und Anlegen desselben gegen eine Anlagefläche;
- Fig. 6: eine Draufsicht auf eine Anlagefläche der ersten Version der erfindungsgemäßen Halteeinheit;
- Fig. 7: eine perspektivische Darstellung entsprechend Fig. 1 einer erfindungsgemäßen Einlegevorrichtung;
- Fig. 8: eine Seitenansicht eines ersten Ausführungsbeispiels einer erfindungsgemäßen Handhabungsvorrichtung als Bestandteil der erfindungsgemäßen Biegeanlage gemäß Fig. 1;
- Fig. 9: einen Querschnitt durch die Schwenkträgereinheit mit der Halteeinheit mit zwei um 180° relativ zueinander gedrehten Stellungen der Halteeinheit;
- Fig. 10: eine Darstellung ähnlich Fig. 2 der erfindungsgemäßen Biegeanlage beim Aufnehmen eines Biegeteils in einer Biegeaufnahmestellung;
- Fig. 11: eine Darstellung ähnlich Fig.10 beim Bewegen des Biegeteils zwischen der Biegeaufnahmestellung und der Biegeeinlegestellung;
- Fig. 12: eine Darstellung ähnlich Fig. 11 beim Einlegen des Biegeteils in der Biegeeinlegestellung in die Biegevorrichtung;
- Fig. 13: eine Darstellung ähnlich Fig. 12 bei beginnendem Biegen des Biegeteils in der Biegevorrichtung;
- Fig. 14: eine Darstellung ähnlich Fig. 13 nach einem durchgeführten Umbiegen des Biegeteils;
- Fig. 15: eine Darstellung ähnlich Fig. 14 eines weitgehend fertig gebogenen Biegeteils in einer Stellung nach einem Durchführen einer letzten Umbiegung;
- Fig. 16: eine Darstellung ähnlich Fig. 15 beim Entnehmen des fertig gebogenen Biegeteils aus der Biegevorrichtung;
- Fig. 17: eine Darstellung ähnlich Fig. 16 eines Bewegen des fertig gebogenen Biegeteils aus der Biegevorrichtung heraus in Richtung der Vorlagevorrichtung;
- Fig. 18: eine Darstellung ähnlich Fig. 17 beim Ablegen des fertig gebogenen Biegeteils auf der Vorlagevorrichtung;
- Fig. 19: eine Darstellung ähnlich Fig. 7 eines zweiten Ausführungsbeispiels einer erfindungsgemäßen Handhabungsvorrichtung;
- Fig. 20: eine Darstellung ähnlich Fig. 7 eines dritten Ausführungsbeispiels einer erfindungsgemäßen Handhabungsvorrichtung;

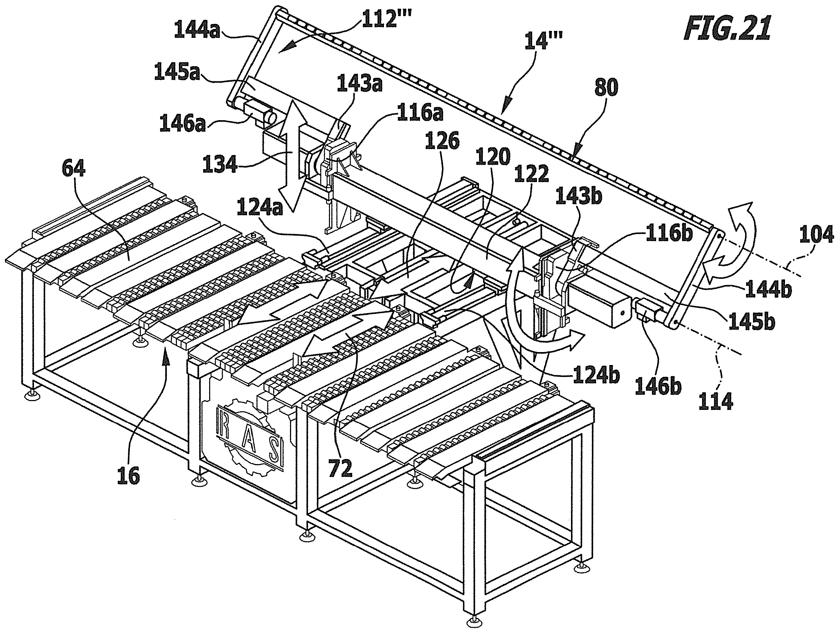

- Fig. 21: eine Darstellung ähnlich Fig. 7 eines vierten Ausführungsbeispiels einer erfindungsgemäßen Handhabungsvorrichtung;
- Fig. 22: eine Darstellung ähnlich Fig. 6 einer Halteeinheit bei einem fünften Ausführungsbeispiel einer erfindungsgemäßen Handhabungsvorrichtung und
- Fig. 23: einen Schnitt ähnlich Fig. 5 durch die Halteeinheit gemäß Fig. 22.

Eine als Ganzes mit 10 bezeichnete Biegeanlage umfasst eine als Ganzes mit 12 bezeichnete Biegevorrichtung, eine als Ganzes mit 14 bezeichnete Handhabungsvorrichtung und eine als Ganzes mit 16 bezeichnete Vorlagevorrichtung für ein Biegeteil B, beispielsweise ein Flachmaterialstück oder ein vorgeformtes, zum Beispiel vorgebogenes Teil.

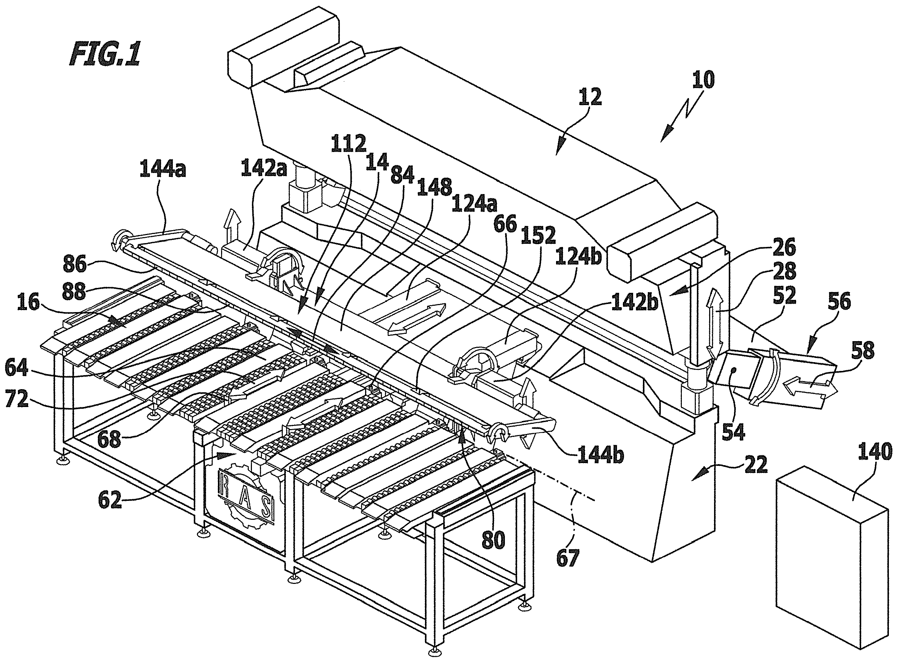

Die Biegevorrichtung umfasst, wie in Fig. 1 bis 3 dargestellt, ein Maschinenständerunterteil 22, welches auf einer Bodenfläche 24 für die Biegeanlage 10 aufsetzbar ist und welches ein unteres Einspannwerkzeug 32 trägt.

Dem unteren Einspannwerkzeug 32 gegenüberliegend ist ein oberes Einspannwerkzeug 34 vorgesehen, das seinerseits von einem Maschinenständeroberteil 26 gehalten ist, wobei das Maschinenständeroberteil 26 relativ zum Maschinenständerunterteil 22 in einer Verfahrrichtung 28 bewegbar ist.

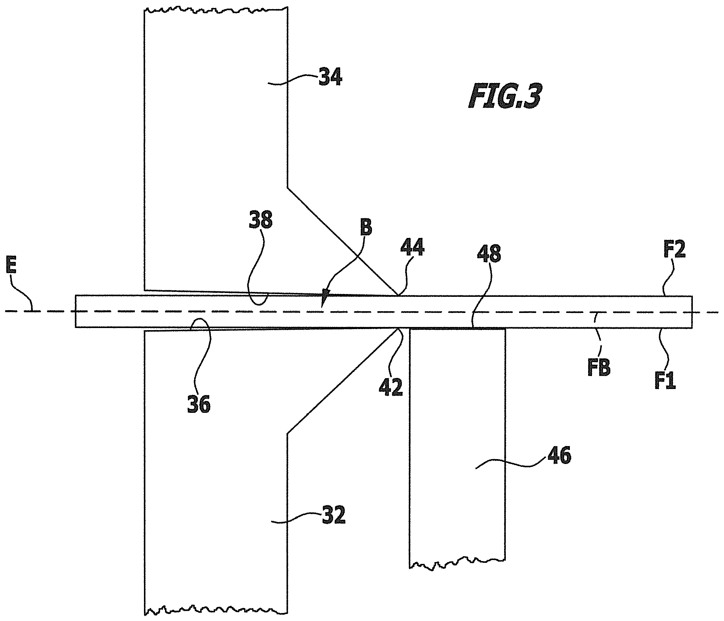

Durch Bewegen in der Verfahrrichtung 28 lässt sich das obere Einspannwerkzeug 34 vom unteren Einspannwerkzeug 32 weg oder auf dieses zu bewegen, wobei, wie in Fig. 3 dargestellt, die Einspannwerkzeuge 32, 34 einander zugewandte Einspannflächen 36 und 38 aufweisen, die im Wesentlichen parallel zu einer Einspannebene E verlaufen, so dass durch diese das beispielsweise aus einem Flachmaterial ausgebildet Biegeteil B sowohl auf einer ersten Flachseite F1 als auch auf einer zweiten Flachseite F2 durch die Einspannwerkzeuge 32, 34 mit den entsprechenden Einspannflächen 36 und 38 beaufschlagbar und einspannbar ist, um das Biegeteil B zum Biegen zu fixieren.

Dabei weist jedes der Einspannwerkzeuge 32, 34 auf einer Seite der Handhabungsvorrichtung 14 abgewandten eine Biegekante 42, 44 auf, um welche beim Biegen des Biegeteils B ein Biegen des über die Biegekanten 42, 44 frei überstehenden Teilbereichs FB erfolgt.

Das Biegen des Biegeteils B um eine der Biegekanten 42, 44 erfolgt mittels einem als Ganzes mit 46 bezeichneten Biegewerkzeug, das mit einer Biegefläche 48 entweder an der ersten Flachseite F1 oder der zweiten Flachseite F2 des freistehenden Teilflächenbereichs FB des Biegeteils B angelegt werden kann, um diesen um die jeweilige der Biegefläche 48 gegenüberliegend angeordnete Biegekante 44, 42 das Biegeteil zu biegen.

Hierzu ist das Biegewerkzeug 46 an einer als Ganzes mit 52 bezeichneten Biegewange gehalten, welche, wie in Fig. 1 dargestellt, beispielsweise um eine Schwenkachse 54 relativ zum Maschinenständerunterteil 22 verschwenkbar ist.

Die Biegewange 52 sitzt an um die Schwenkachse 54 relativ zum Maschinenständerunterteil 22 verschwenkbaren Biegewangenträgern 56, die außerdem noch eine einstellbare Positionierung der Biegewange 52 in radialer Richtung 58 relativ zur Schwenkachse 54 und insbesondere auch noch quer zu der radialen Richtung 58 erlauben, um die Biegewange 52 sowohl für das Biegen um die Biegekante 42 als auch um das Biegen um die Biegekante 44 geeignet positionieren und gegebenenfalls dem freistehenden Teilflächenbereich FB umfahren zu können.

Eine derartige Biegevorrichtung ist hinsichtlich weiterer Details in der EP 0 497 778 B2 und/oder EP 0 497 780 B1 beschrieben, auf welche hinsichtlich der Bewegbarkeit des Biegewerkzeugs Bezug genommen wird.

Eine alternative Biegevorrichtung mit denselben Biegemöglichkeiten ist in der EP 1 064 108 B1 beschrieben, auf welche ebenfalls Bezug genommen wird.

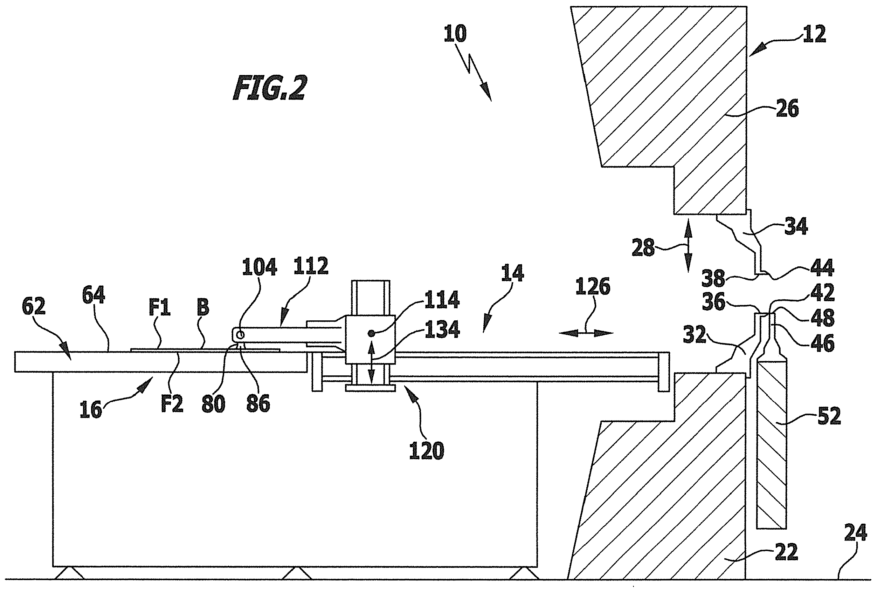

Wie in Fig. 1 und 2 ferner dargestellt, umfasst die Vorlagevorrichtung 16 einen Vorlagetisch 62, welcher eine Vorlagefläche 64 bildet, auf welcher das Biegeteil B auflegbar ist.

Ferner sind an dem Vorlagetisch 62 Anschlagelemente 66 vorgesehen, gegen welche das auf die Vorlagefläche 64 aufzulegende Biegeteil B anlegbar ist, um dieses zumindest in zwei Raumrichtungen definiert zu positionieren, während eine Positionierung in einer Raumrichtung parallel zu einer durch die Anschlagelemente 66 definierten Anschlaglinie 67 undefiniert ist.

Schließlich umfasst der Vorlagetisch 62 noch Schieberelemente 68, welche in einer Verschieberichtung 72 parallel zur Vorlagefläche 64 bewegbar sind, und zwar in Richtung der Anschlagelemente 66 oder von diesen weg, um mit diesen Schieberelementen 68 ein Biegeteil B in Richtung der Anschlagelemente 66 zu bewegen und das Biegeteil B an diesen anlegen zu können.

Durch die Anschlagelemente 66 und die Schieberelemente 68 ist somit ein Biegeteil B auf dem Vorlagetisch in einem als Ganzes mit 64 bezeichneten Vorlagebereich in einer Biegeteilaufnahmestellung in mindestens zwei Raumrichtungen definiert positionierbar.

Die Handhabungsvorrichtung 14 dient zum Übergeben des Biegeteils B von der Biegeteilaufnahmestellung in in eine Biegeteileinlegestellung in der Biegevorrichtung 12.

Zum Aufnehmen eines Biegeteils B aus der Biegeteilaufnahmestellung auf dem Vorlagetisch 62 umfasst die Handhabungsvorrichtung 14 eine als Ganzes mit 80 bezeichnete Halteeinheit, welche bei dem in Fig. 1 dargestellten Ausführungsbeispiel in Form einer sich in einer Längsrichtung 84 erstreckenden Halteleiste 86 ausgebildet ist, die eine Vielzahl von in der Längsrichtung 84 aufeinanderfolgend angeordneten Halteelementen 88 aufweist.

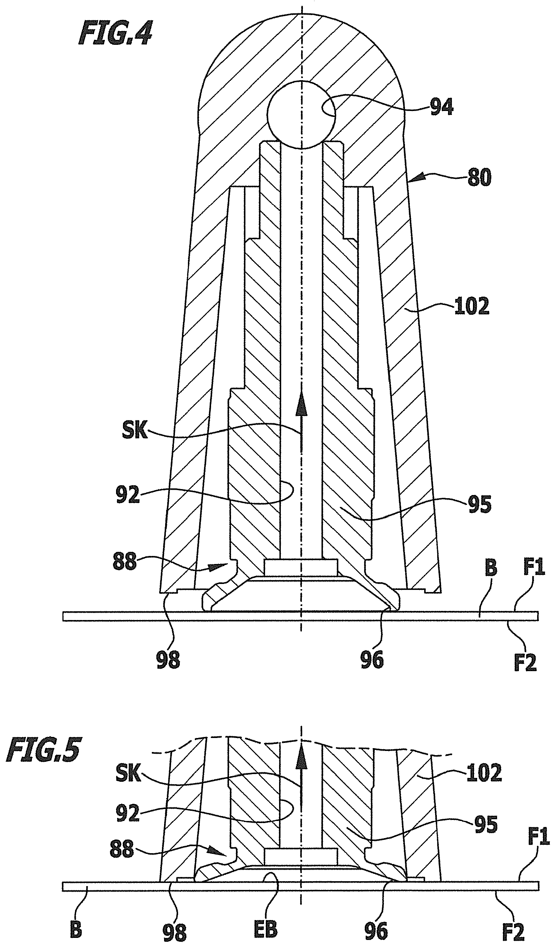

Dabei ist jedes der Halteelemente 88, wie in Fig. 4 und Fig. 5 dargestellt, mit einer Saugkammer 92 versehen, welche über eine Saugleitung 94 auf einen Unterdruck gegenüber dem Umgebungsdruck bringbar ist.

Jede Saugkammer 92 weist eine in einem Saugerkopf 95 aus elastischem Material ausgebildete Saugkammeröffnung 96 auf, so dass das derart ausgebildete Halteelement 88 auf eine der Flachseiten F1, F2 des Biegeteils B mit dem Saugerkopf 95 aufgesetzt wird, um die entsprechende Flachseite F in einem als Erfassungsbereich EB bezeichneten und sich parallel zur Längsrichtung 84 erstreckenden streifenförmigen Teilflächenbereich des Biegeteils B anzusaugen.

Zur exakten Lagepositionierung umfasst ferner das jeweilige Halteelement 88 insbesondere eine um die jeweilige Saugkammeröffnung 96 herum angeordnete Anlagefläche 98, welche bei auf der Flachseite F1 der Biegeteils B aufgesetztem Halteelement 88 das Biegeteil B im Erfassungsbereich EB abstützt, wobei gleichzeitig das Biegeteil B mit einer senkrecht zur Flachseite F1 in Richtung der Saugkammer 92 wirkenden Saugkraft SK angesaugt und damit an der Anlagefläche 98 fixiert wird.

Damit erzeugt jede Saugkammer 92 die Saugkraft SK, so dass durch die Vielzahl von in der Längsrichtung 84 aufeinanderfolgenden Saugkammern 92 am Ort der jeweiligen Saugkammer 92 jeweils die Kraft SK auf die Flachseite F des Biegeteils B wirkt, um die Flachseite F an diesen Ort gegen die Anlagefläche 98 zu ziehen.

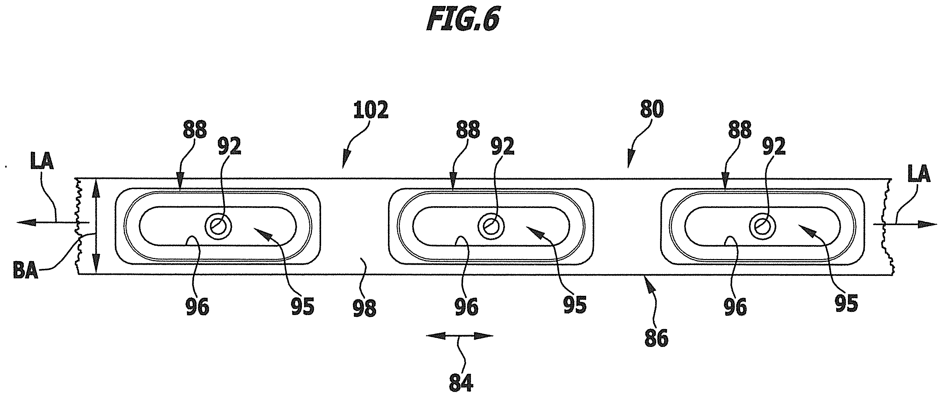

Wie in Fig. 6 dargestellt, sind die einzelnen Saugerköpfe 95 in der Längsrichtung 84 aufeinanderfolgend in einem zusammenhängenden Saugkammergehäuse 102 angeordnet, welches die Halteleiste 86 bildet und die Anlagefläche 98 trägt, in welcher die Saugkammeröffnungen 96 liegen.

Insgesamt erstreckt sich die Anlagefläche 98 in streifenähnlich langgestreckter Form in der Längsrichtung 84, wobei die Längenausdehnung LA der Anlagefläche 98 ein Vielfaches, vorzugsweise mehr als das Zehnfache, von deren Breitenausdehnung BA beträgt.

Wie ferner in den Fig. 1, 7 und 8 dargestellt, ist die Halteeinheit 80 um eine erste Schwenkachse 104, die parallel zur Längsrichtung 84 der Halteeinheit 80 verläuft, schwenkbar an einer als Ganzes mit 112 bezeichneten Schwenkträgereinheit der Handhabungsvorrichtung 14 gehalten, wobei die Schwenkträgereinheit 112 ihrerseits wiederum um eine zweite Schwenkachse 114 schwenkbar an einer als Ganzes mit 116 bezeichneten Schwenkträgerbasis der Handhabungsvorrichtung 14 verschwenkbar gelagert ist. Die Schwenkträgerbasis 116 ist ihrerseits durch eine als Ganzes mit 120 bezeichnete Trägerbasisbewegungseinheit zwischen der Vorlagevorrichtung 16 und der Biegevorrichtung 12 bewegbar.

Die Trägerbasisbewegungseinheit 120 lässt sich dadurch realisieren, dass die Schwenkträgerbasis 116 beispielsweise durch zwei Schwenkträgerbasiseinheiten 118a und 118b gebildet wird, die ihrerseits an einer Basiseinheit 122 angeordnet sind, die die gesamte Schwenkträgereinheit 112 mit der Halteeinheit 80 trägt.

Die Basiseinheit 122 ist ferner ihrerseits an zwei im Abstand voneinander verlaufenden Linearführungen 124a und 124b mit Führungsschlitten 132a, 132b der Trägerbasisbewegungseinheit 120 geführt und dabei in einer Zufuhrrichtung 126 zwischen der Vorlagevorrichtung 16 und der Biegevorrichtung 12, insbesondere den Einspannwerkzeugen 32, 34, bewegbar, wobei die Zufuhrrichtung 126 vorzugsweise parallel zur Einspannebene E verläuft, welche im Zusammenhang mit den Einspannwerkzeugen 32, 34 in Fig. 3 erläutert wurde.

Die Linearführungen 124a, 124b sitzen auf einem mit dem Vorlagetisch 62 verbundenen Trägergestell 128, das beispielsweise seinerseits wiederum auf der Bodenfläche 24 abgestützt ist.

An den Linearführungen 124a und 124b sind die Führungsschlitten 132a und 132b in der Zufuhrrichtung 126 bewegbar geführt, die die Basiseinheit 122 tragen und mit welchen die Basiseinheit 122 positionsgesteuert, insbesondere lageregelt, beispielsweise mittels eines rechnergesteuerten Linearachsantriebs mit Messsystem, in der Zufuhrrichtung 126 exakt positionierbar ist.

Bei dem dargestellten Ausführungsbeispiel der Handhabungsvorrichtung 14 sind zusätzlich noch die Schwenkträgerbasiseinheiten 118a, 118b relativ zur Basiseinheit 122 in einer quer zur Zufuhrrichtung 126 verlaufenden Höhenpositionierrichtung 134 bewegbar.

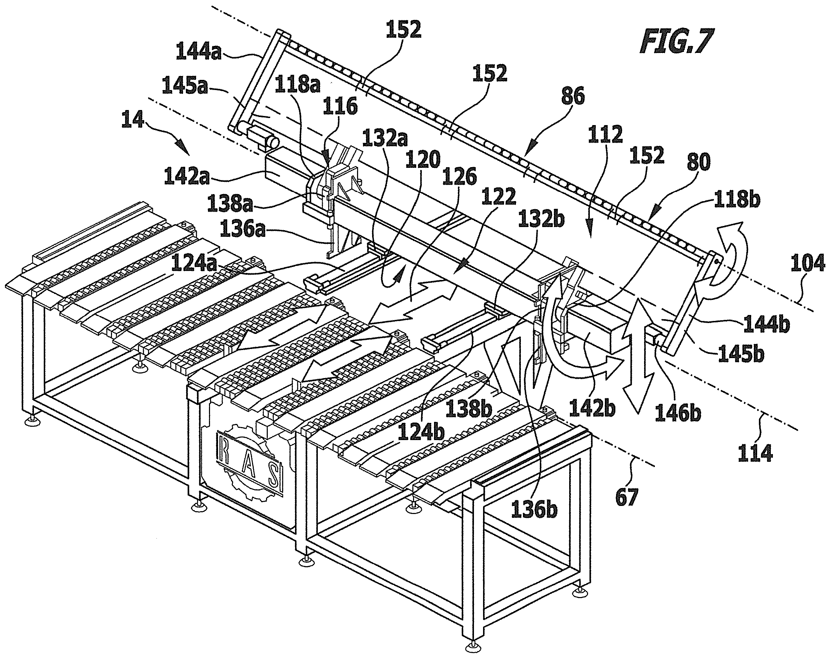

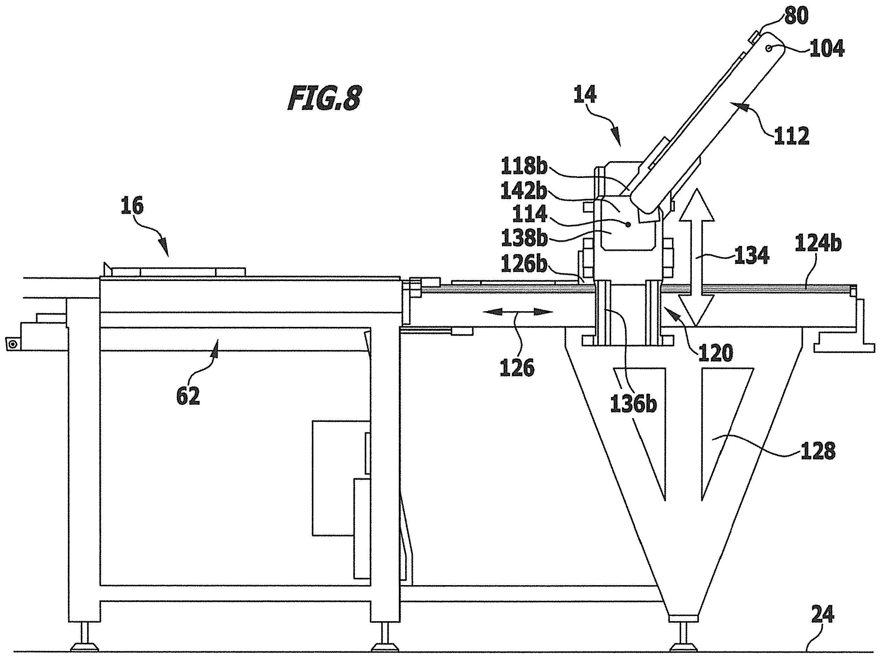

Hierzu umfasst die Basiseinheit 122 gemäß Fig. 7 und 8 ebenfalls quer zu den Linearführungen 124a, 124b verlaufende Linearführungen 136a, 136b, an denen die jeweils Schwenkträgerbasiseinheiten 118a und 118b tragende Schlitteneinheiten 138a, 138b in der Höhenpositionierrichtung 134 verfahrbar und exakt positionierbar geführt sind.

Hierzu sind ebenfalls rechnergesteuerte Linearachsantriebe mit Messvorrichtungen vorgesehen.

Die Trägerbasisbewegungseinheit 120 ermöglicht folglich eine durch eine Maschinensteuerung 140 gesteuerte und positionsgesteuerte oder lagegeregelte Positionierung der Schwenkträgerbasis 116 in der Zufuhrrichtung 126 und der Höhenpositionierrichtung 134.

Schließlich umfassen die Schwenkträgerbasiseinheiten 118a und 118b ihrerseits noch Schwenkantriebe 142a, 142b, mit denen die Schwenkträgereinheit 112 relativ zur Schwenkträgerbasis 116 mittels der Maschinensteuerung 140 um die zweite Schwenkachse 114 positionsgesteuert oder lagegeregelt verschwenkbar ist.

Die Schwenkträgereinheit 112 ist so ausgebildet, dass diese mit durch die Schwenkantriebe 142a, 142b um die zweite Schwenkachse 114 schwenkbar gelagerte Antriebsarmen 143a, 143b verbundene Schwenkarme 144a, 144b aufweist, die sich radial der zweiten Schwenkachse 114 in Richtung der ersten Schwenkachse 104 erstrecken und die Halteeinheit 80 um die erste Schwenkachse 104 schwenkbar lagern sowie die Möglichkeit aufweisen, die Halteeinheit 80 positionsgesteuert oder lagegeregelt um die erste Schwenkachse 104 zu verschwenken.

Hierzu sind beispielsweise den Schwenkarmen 144a, 144b Schwenkantriebe 146a, 146b zugeordnet, welche mittels der Maschinensteuerung 140 ein exaktes positionsgesteuert oder lagegeregelt es Verschwenken der Halteeinheit 80 relativ zu den Schwenkarmen 144a, 144b um die erste Schwenkachse 104 ermöglichen. Eine Verbindung zwischen den Antriebsarmen 143a, 143b und den Schwenkarmen 144a, 144b erfolgt durch Verbindungsarme 145a, 145b.

Zur Verbesserung der Stabilität der Halteeinheit 80, insbesondere zur Verbesserung der exakten Aufrechterhaltung der Ausrichtung der Halteeinheit 80 parallel zur ersten Schwenkachse 104 ist die Schwenkträgereinheit 112 nicht nur durch die Schwenkarme 144a, 144b gebildet, sondern umfasst einen sich zwischen den Schwenkarmen 144a, 144b erstreckenden eigensteifen Einsatz 148, welcher nicht nur die Schwenkarme 144a, 144b verwindungssteif relativ zueinander positioniert, sondern auch die Halteeinheit 80, insbesondere die Halteleiste 86, an mehreren in der Längsrichtung 84 aufeinanderfolgenden Schwenklagerstellen 152 an dem eigensteifen Einsatz 148 um die erste Schwenkachse 104 drehbar lagert, um damit gleichzeitig die Steifigkeit der Halteeinheit 80 insgesamt gegen ein Durchbiegen quer zur Längsrichtung 84 zu verbessern, so dass sich insbesondere die Halteeinheit 80 quer zu ihrer Längsrichtung 84 beim Halten des jeweiligen Biegeteils B und Positionieren desselben im Wesentlichen durchbiegungsfrei verhält und somit auch das Biegeteil B aufgrund der über dessen gesamte Erstreckung in der Längsrichtung 84 verteilt erfolgenden Fixierung an der Halteeinheit 80 im Wesentlichen durchbiegungsfrei hält.

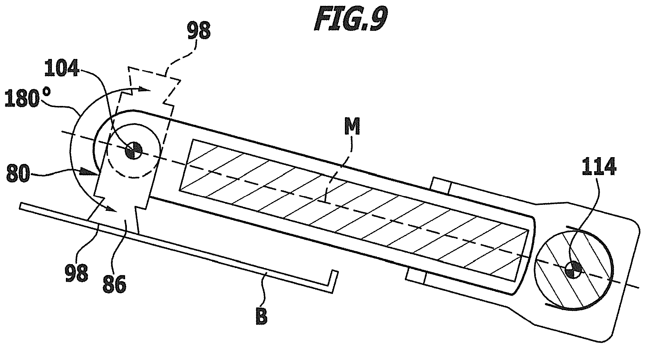

Vorzugsweise beträgt der Abstand der Anlageflächen 98 der Halteeinheit 80 von der ersten Schwenkachse 104 weniger als ein Drittel, noch besser weniger als ein Fünftel des Abstandes der ersten Schwenkachse 104 von der zweiten Schwenkachse 114, wie in Fig. 9 vergrößert dargestellt.

Der Abstand der Anlagefläche 98 von der ersten Schwenkachse 104 ist jedoch mindestens so groß, dass ein an der Haltefläche 98 anliegendes und mit der Halteeinheit 80 um die erste Schwenkachse 104 schwenkbares Biegeteil B in zwei Stellungen verschwenkt werden kann, in denen jeweils die Anlageflächen 98 der Halteeinheit 80 parallel zur Einlegeebene E ausgerichtet werden können.

Beispielsweise lässt sich dies dadurch realisieren, das in diesen beiden Stellungen die Anlagefläche 98 parallel zu einer durch die Schwenkachsen 104 und 114 hindurch verlaufenden Mittelebene M der Schwenkträgereinheit 112 stehen, so dass eine Schwenkbewegung um die erste Schwenkachse 104 um mindestens 180° möglich ist ohne dass das Biegeteil B mit der Schwenkträgereinheit 112, insbesondere dem eigensteifen Rahmen 148 kollidiert, wie in Fig. 9 dargestellt.

Aus diesem Grund sind die beiden um 180° zueinander verschwenkten Stellungen der Halteeinheit 80 durch einen ausreichend großen Abstand der Anlagefläche 98 von der ersten Schwenkachse 104 realisiert, so dass Kollisionen mit der Schwenkträgereinheit 112, insbesondere dem eigensteifen Einsatz 148, vermieden werden können.

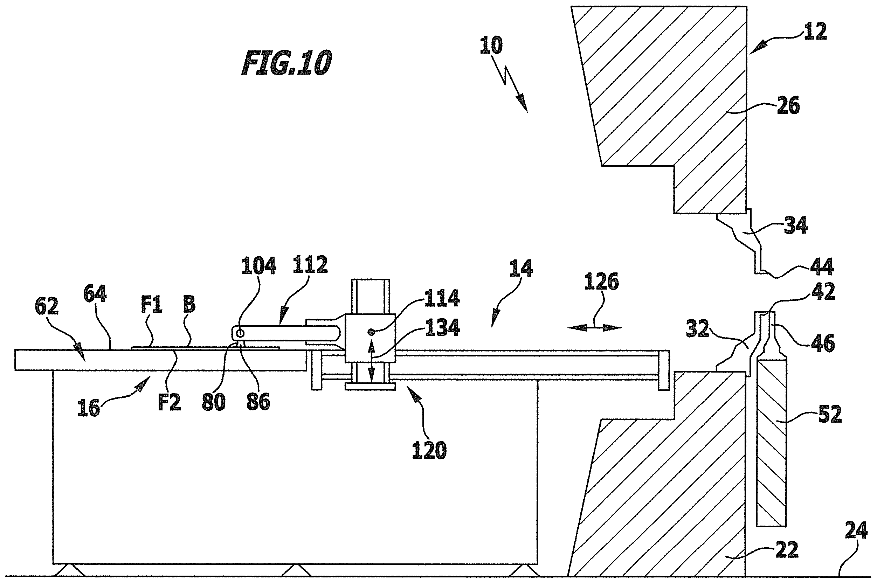

Die erfindungsgemäße Biegeanlage 10 mit der Biegevorrichtung 12, der Handhabungsvorrichtung 14 und der Vorlagevorrichtung 16 arbeitet wie folgt:
Wie in Fig. 10 dargestellt, wird beispielsweise ein Stück Flachmaterial, welches ein Beispiel für die Ausgangsform des Biegeteils B darstellt, auf die Vorlagevorrichtung 16, und zwar den Vorlegetisch 62, aufgelegt und, wie bereits beschrieben, gegen die Anschlagelemente 66 in eine Biegeteilaufnahmestellung bewegt und damit in mindestens zwei Raumrichtungen lagedefiniert zur Aufnahme durch die Handhabungsvorrichtung 14 auf der Vorlagefläche 64 positioniert.

In dieser lagedefinierten Biegeaufnahmestellung wird dann, gesteuert durch die Maschinensteuerung 140, durch Bewegen der Halteeinheit 80, beispielsweise durch Schwenken der Halteeinheit 80 um die erste Schwenkachse 104 und/oder Verschwenken der Schwenkträgereinheit 112 um die zweite Schwenkachse 114, und/oder Bewegen der Schwenkträgerbasis 116 mittels der Trägerbasisbewegungseinheit 120, insbesondere durch Verfahren der Basiseinheit 122 in der Zufuhrrichtung 126 und/oder Verfahren der Schwenkträgerbasiseinheiten 118a, 118b in der Höhenpositionierrichtung 134, die Halteeinheit 80 mit der Anlagefläche 98 auf den Erfassungsbereiche EB der ersten Flachseite F1 des Biegeteils B aufgelegt, während das Biegeteil B mit der Flachseite F2 auf der Vorlagefläche 64 aufliegt (Fig. 10).

Durch von der Maschinensteuerung 140 gesteuertes selektives Aktivieren maximal der Saugkammern 92, die auf der Flachseite F1 des Biegeteils B aufliegen, erfolgt ein Fixieren des Biegeteils B an der Halteeinheit 80 durch die über die gesamte Längserstreckung der Halteeinheit 80 am Ort jeder Saugkammer 92 erzeugten Kräfte SK und somit eine Fixierung des Biegeteils B an der Halteeinheit 80 über deren gesamte Ausdehnung in der Längsrichtung 84 in dem Erfassungsbereich EB des Biegeteils B.

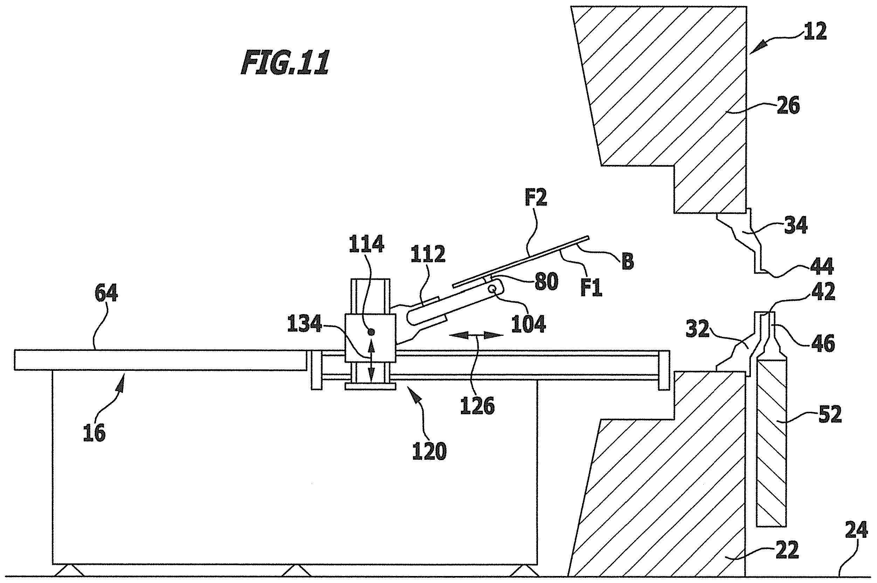

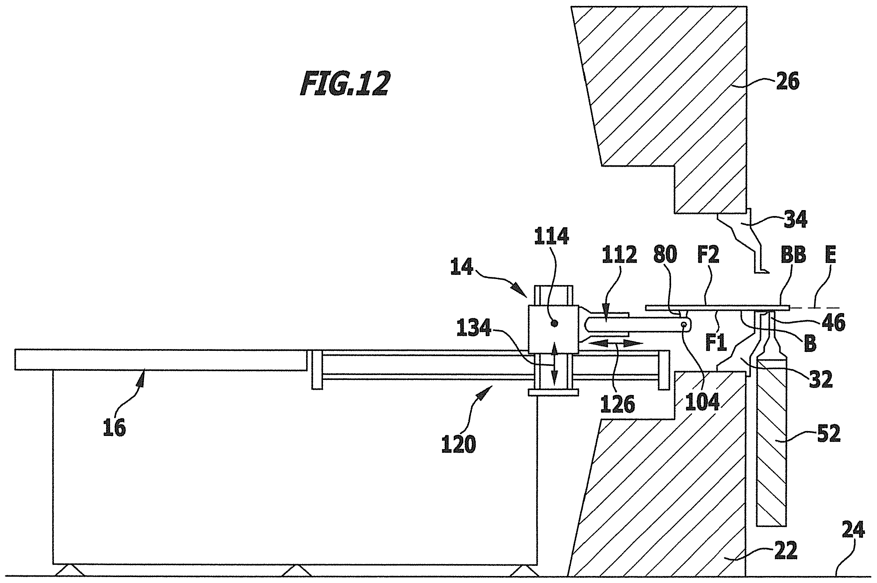

Die Handhabungsvorrichtung 14 kann, wie in Fig. 11 dargestellt, gesteuert durch die Maschinensteuerung 140, das Biegeteil B, beispielsweise durch Verschwenken der Schwenkträgereinheit 112 um die zweite Schwenkachse 114 und/oder Bewegen der Schwenkträgerbasis 116 mittels der Trägerbasisbewegungseinheit 120, von der Vorlagefläche 64 abheben und in Richtung der Biegevorrichtung 12 bewegen, wobei beim Abheben des Biegeteils B von der Vorlagefläche 64 die Basiseinheit 122 auf einer der Biegevorrichtung 12 zugewandten Seite des Biegeteils B angeordnet ist, wie in Fig. 10 dargestellt, während zum Einlegen des Biegeteils B in die Biegevorrichtung 12 das Biegeteil B über die zweite Schwenkachse 114 hinweg bewegt wird, so dass, wie in Fig. 11 und 12 dargestellt, beim Einlegen des Biegeteils B in die Biegevorrichtung 12 das Biegeteil B auf einer der Biegevorrichtung 12 zugewandten Seite der Basiseinheit 122 angeordnet ist.

Zum Einlegen des Biegeteils B zwischen die Einspannwerkzeuge 32 und 34 ist es nicht nur notwendig, die Schwenkträgereinheit 112 um die zweite Schwenkachse 114 zu verschwenken, sondern gleichzeitig erforderlich, mittels der Trägerbasisbewegungseinheit 120, gesteuert durch die Maschinensteuerung 140, einerseits die Basiseinheit 122 in der Zufuhrrichtung 126 auf die Einspannwerkzeuge 32, 34 zu zu bewegen und andererseits erforderlich, die Schwenkträgerbasiseinheiten 118 in der Höhenpositionierrichtung 134 derart zu bewegen, dass sich ein zu biegender Teilbereich des Biegeteils B in der Einspannebene E erstreckt und somit auf die Einspannfläche 36 des unteren Einspannwerkzeugs 32 in paralleler Ausrichtung zur Einspannebene E aufgelegt werden kann, wie in Fig. 12 dargestellt.

Ist das Biegeteil B in der Einspannebene E ausgerichtet, so erfolgt, ebenfalls gesteuert durch die Maschinensteuerung 140, ein Schließen der Einspannwerkzeuge 32 und 34 durch Bewegen des oberen Einspannwerkzeugs 34 in Richtung des unteren Einspannwerkzeugs 32 und somit ein Einspannen des Biegeteils B zwischen den Einspannflächen 36 und 38 der Einspannwerkzeuge 32 bzw. 34.

In dieser eingespannten Position des Biegeteils B ist ein exaktes Positionieren des Biegeteils B durch die Handhabungsvorrichtung 14 nicht zwingend erforderlich, da das Biegeteil B definiert durch die Einspannwerkzeuge 32 und 34 fixiert ist.

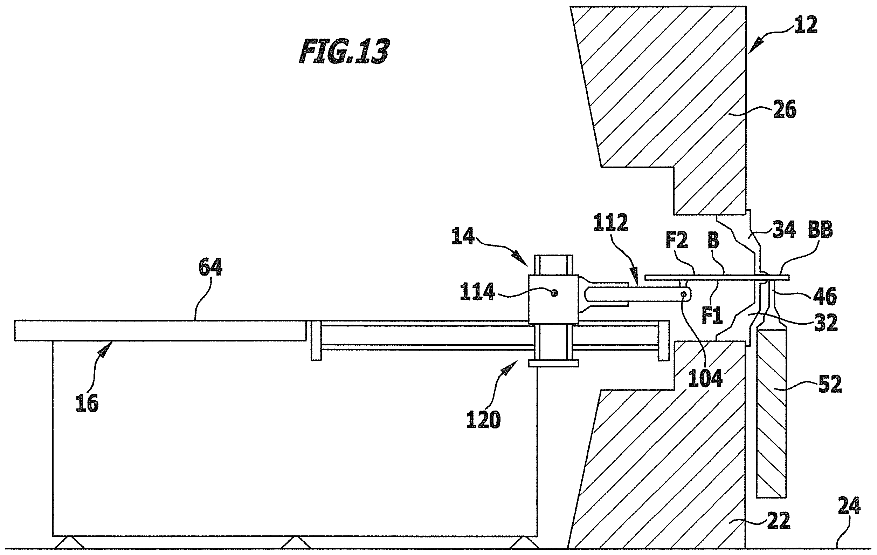

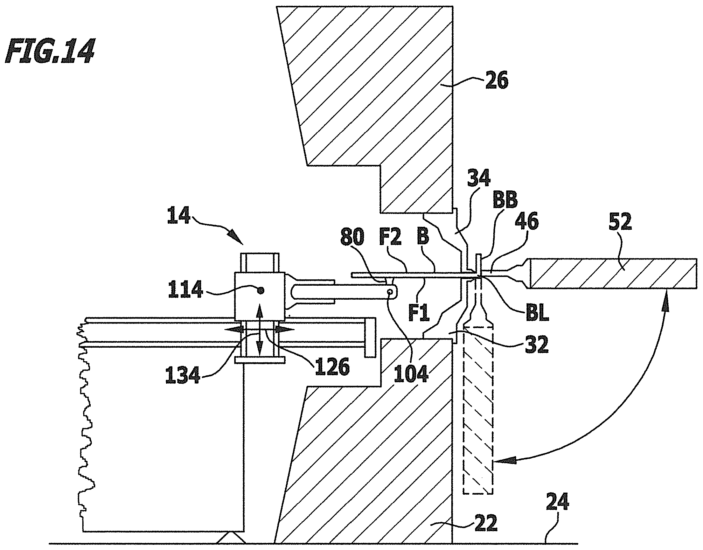

In dieser durch die Einspannwerkzeuge 32 und 34 fixierten Stellung erfolgt ein Biegen eines über eine der Biegekanten 42, 44 der Einspannwerkzeuge 32, 34 überstehenden Biegebereichs BB des Biegeteils B durch das Biegewerkzeug 46, wie sich aus dem Vergleich der Fig. 13 und 14 ergibt, wobei hierzu beispielsweise das Biegewerkzeug 46, gesteuert durch die Maschinensteuerung 140, um die Schwenkachse 54 verschwenkt wird und somit entsteht in dem Biegeteil B eine Biegelinien BL und die Biegekante 44 gebogen wird.

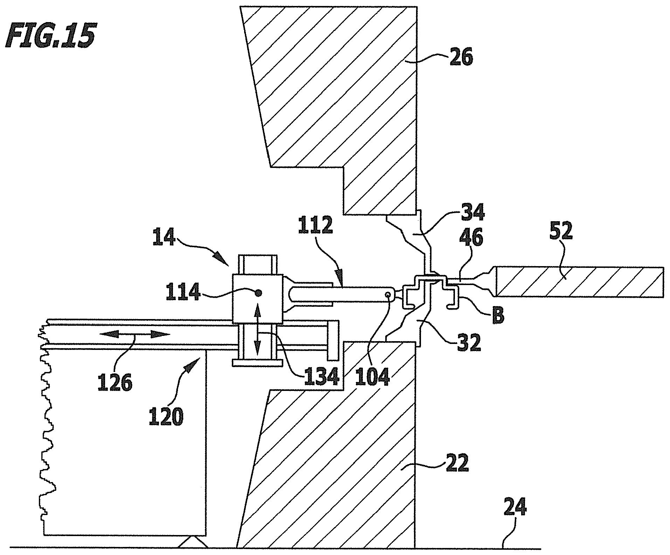

Durch das Anbringen weiterer Umbiegungen unter Erzeugung weiterer Biegelinien BL auf einer Seite oder auf beiden Seiten des Einspannbereichs EB, lässt sich, wie in Fig. 15 dargestellt, das Biegeteil B in den vorgesehenen Endzustand biegen, wobei jeweils nach jeder Umbiegung das Biegeteil B aus den Einspannwerkzeugen 32, 34 durch Auseinanderfahren derselben freigegeben wird, hierbei durch die Erfassung der Achspositionen der Schwenkachsen 104 und 114 und der Linearachsen der Handhabungsvorrichtung 14 wieder positionsgenau erfasst wird und wieder für das Ausführen der jeweiligen Biegung erneut unter exakten Positionierung des Biegeteils B relativ zu den Biegekanten 42, 44 durch die Handhabungsvorrichtung 14 positioniert und durch die Einspannwerkzeuge eingespannt wird.

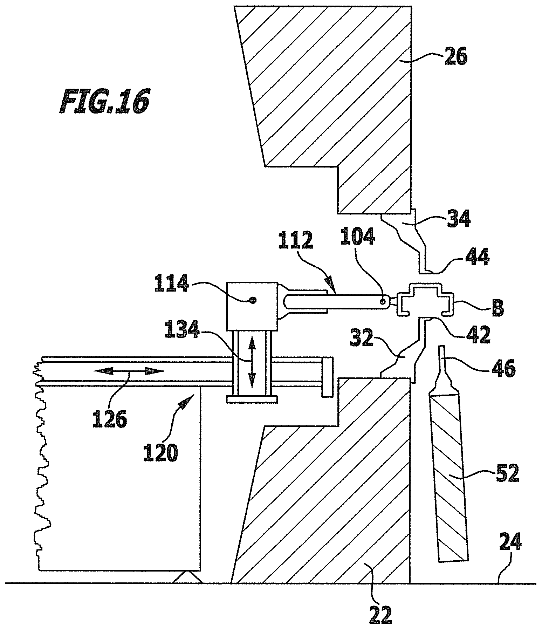

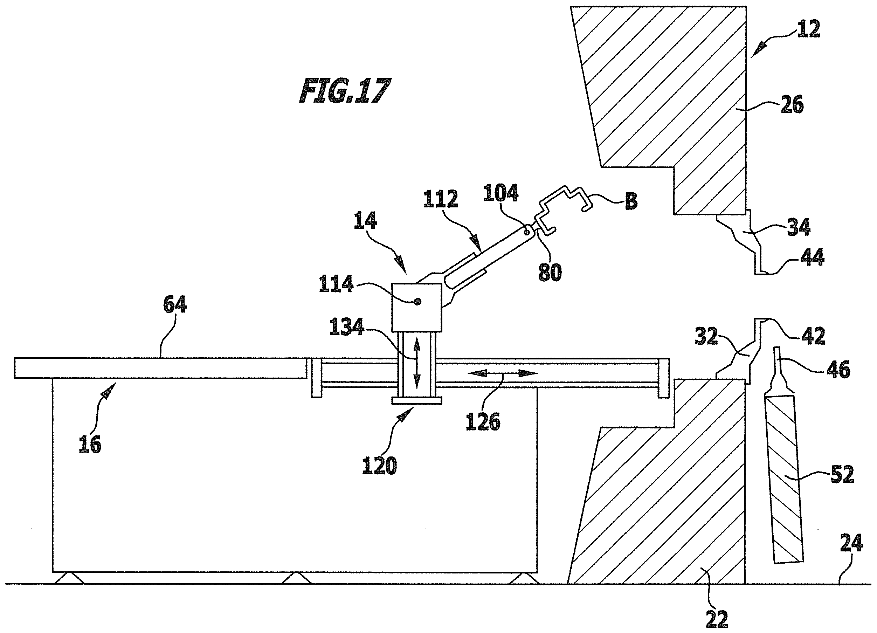

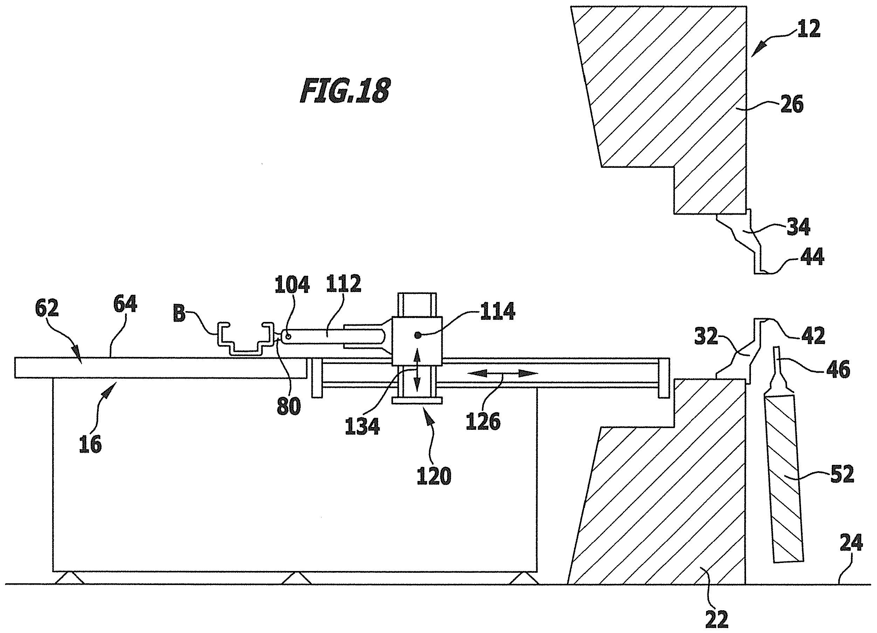

Nach Beendigen der einzelnen Biegevorgänge wird, wie in Fig. 16 und 17 dargestellt, das Biegeteil B aus der Biegevorrichtung 12 herausbewegt und durch ein Verschwenken mittels der Schwenkträgereinheit 112 der Handhabungsvorrichtung 14, insbesondere um die zweite Schwenkachse 114, zur Vorlagevorrichtung 16 bewegt (Fig. 18) und von dieser oder von einer speziellen vorgesehenen Transportvorrichtung aufgenommen.

Dadurch, dass das Biegeteil B in der Vorlagevorrichtung 16 mittels der Halteeinheit 80 in einem Erfassungsbereich EB einmal erfasst und fixiert wird und insbesondere ohne Lösen des Erfassungsbereichs EB von der Halteeinheit 80 zu den verschiedensten Biegevorgängen in die Biegevorrichtung 12 eingelegt und danach wieder entnommen wird, besteht die Möglichkeit, mit höchster Präzision und höchster Zuverlässigkeit sowie hoher Geschwindigkeit verschiedene Biegevorgänge an dem Biegeteil B nacheinander bei einseitig von der Halteeinheit 80 gehaltenen Biegeteil B und ohne Lösen des Erfassungsbereichs EB von der Halteeinheit 80 und ohne Neupositionieren des Biegeteils B zum erneuten Greifen vorzunehmen und dieses Biegeteil B in die Endform zu biegen, in welcher das Biegeteil B beispielsweise ein offenes, insbesondere ein einseitig offenes Profilteil ist.

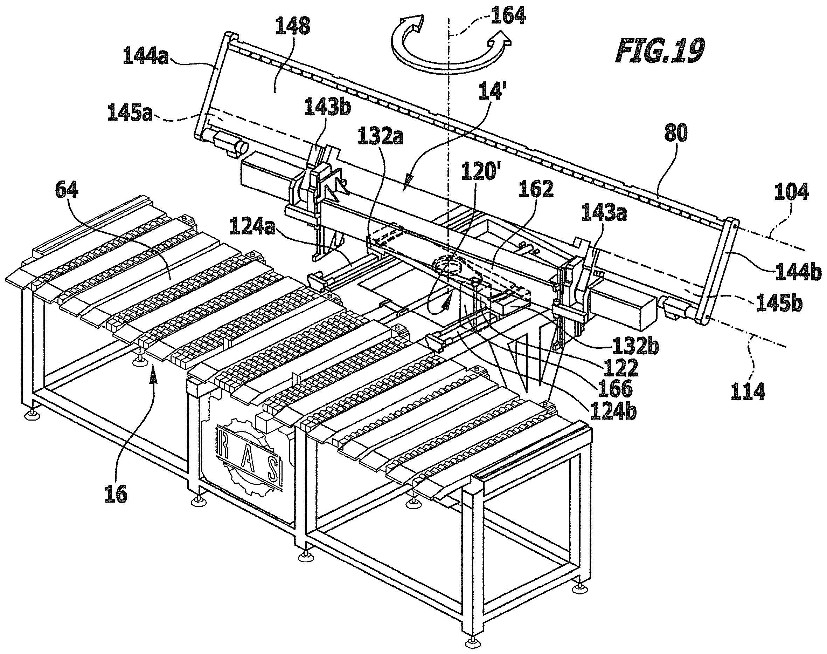

Bei einem zweiten Ausführungsbeispiel einer erfindungsgemäßen Handhabungsvorrichtung 14', dargestellt in Fig. 19, ist die Trägerbasisbewegungseinheit 120' derart ausgebildet, dass die beiden an den Linearführungen 124a, 124b geführten Führungsschlitten 132a, 132b durch eine Traverse 162 miteinander verbunden sind, an welcher wiederum die Basiseinheit 122 um eine Drehachse 164 drehbar gelagert und durch einen seitens der Maschinensteuerung 140 positionsgesteuerten oder lagegeregelten Drehantrieb 166 drehbar ist, wobei die Drehachse 164 quer zur zweiten Schwenkachse 114 verläuft.

Ferner verläuft die Drehachse 164 vorzugsweise senkrecht zur Einlegeebene E.

Damit besteht die Möglichkeit, die gesamt Schwenkträgereinheit 112 beim Einlegen des Biegeteils B parallel zur jeweiligen Biegekante 42, 44 auszurichten oder gegebenenfalls nachzujustieren.

Ferner verläuft auch die Drehachse 164 vorzugsweise senkrecht zur Vorlagefläche 64, so dass ebenfalls die Möglichkeit besteht, ein auf der Vorlagefläche 64 liegendes Biegeteil B, welches beispielsweise nicht durch die Anschlagelemente 66 definiert in zwei Raumrichtungen ausgerichtet ist, sondern dessen Position beispielsweise durch Vermessen bestimmt ist, in definierter Ausrichtung und gegebenenfalls abweichend von der Ausrichtung der Anschlagelemente 66 mit der Halteeinheit 80 zu erfassen.

Im Übrigen ist das zweite Ausführungsbeispiel in gleicher Weise ausgebildet und aufgebaut wie das erste Ausführungsbeispiel, so dass dieselben Bezugszeichen verwendet werden und ferner auf die Ausführungen zum ersten Ausführungsbeispiel vollinhaltlich verwiesen werden kann.

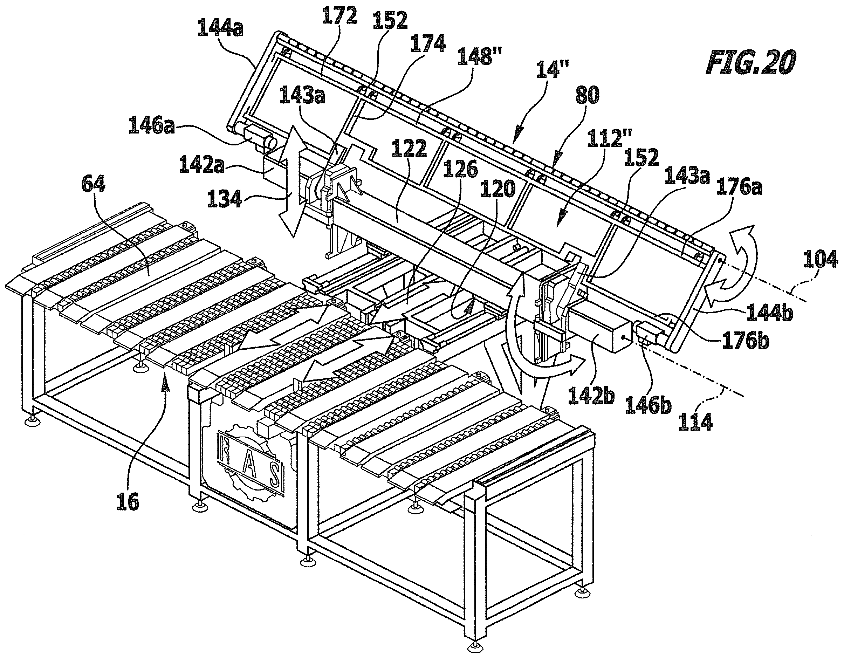

Bei einem dritten Ausführungsbeispiel einer erfindungsgemäßen Handhabungsvorrichtung 14", dargestellt in Fig. 20, umfasst die Schwenkträgereinheit 112" die äußeren Schwenkarme 144a, 144b und der zwischen diesen angeordnete eigensteife Einsatz 148" ist als Leiterkonstruktion oder Rahmenkonstruktion 172 ausgebildet, welche radial zur zweiten Schwenkachse 114 und zur ersten Schwenkachse 104 verlaufende Streben 174 und parallel zu den Schwenkachsen 114, 104 verlaufende Streben 176a, 176b umfasst, die fest miteinander und auch fest mit den Antriebsarmen 143a, 143b sowie mit den Schwenkarmen 144a, 144b verbunden sind.

Dabei trägt beispielsweise die parallel zur Halteeinheit 80 verlaufende und der ersten Schwenkachse 104 zugewandt angeordnete Strebe 176a die Schwenklagerstellen 152, mit denen die Halteeinheit 80 mehrfach um die erste Achse 104 drehbar an dem Einsatz 148" gehalten ist, während die der zweiten Schwenkachse 114 zugewandt angeordnete Strebe 176b die Verbindungsarme 145a, 145b ersetzt.

Im Übrigen ist das dritte Ausführungsbeispiel der erfindungsgemäßen Handhabungsvorrichtung 14" in gleicher Weise ausgebildet wie das erste oder auch gegebenenfalls das zweite Ausführungsbeispiel, so dass hinsichtlich der Beschreibung der weiteren Elemente vollinhaltlich auf die Ausführungen zu diesen Ausführungsbeispielen verwiesen werden kann.

Bei einem vierten Ausführungsbeispiel einer erfindungsgemäßen Handhabungsvorrichtung 14"' umfasst die Schwenkträgereinheit 112"' lediglich die beiden Schwenkarme 144a, 144b zwischen denen sich die Halteeinheit 80 dann, wenn diese ausreichend steif ausgebildet ist, freitragend erstreckt, so dass die Halteeinheit 80 mit dem an dieser fixierten Biegeteil um 360° um die erste Schwenkachse 104 relativ zu den Schwenkarmen 144a, 144b verschwenkbar ist, da kein Einsatz 148 vorhanden ist, welcher eine derartige Schwenkbewegung behindern würde.

In diesem Fall entfallen auch die Schwenklagerstellen 152 zwischen den Schwenkarmen 144a, 144b, so dass die Halteeinheit 80 lediglich an den Schwenkarmen 144a und 144b schwenkbar gelagert ist und sich freitagend zwischen diesen erstreckt.

Bei diesem Ausführungsbeispiel sind die Schwenkarme 144a und 144b über Verbindungsarme 145a und 145b mit den Antriebsarmen 143a, 143b verbunden, es liegen jedoch zwischen den Schwenkarmen 144a und 144b keine weiteren diese relativ zueinander stabilisierenden Strukturen.

Im Übrigen ist auch das vierte Ausführungsbeispiel der erfindungsgemäßen Handhabungsvorrichtung in gleicher Weise ausgebildet wie die voranstehenden Ausführungsbeispiele, so dass für dieselben Elemente dieseleben Bezugszeichen Verwendung finden und hinsichtlich der Beschreibung derselben vollinhaltlich auf die Ausführungen zu den voranstehenden Ausführungsbeispielen Bezug genommen werden kann.

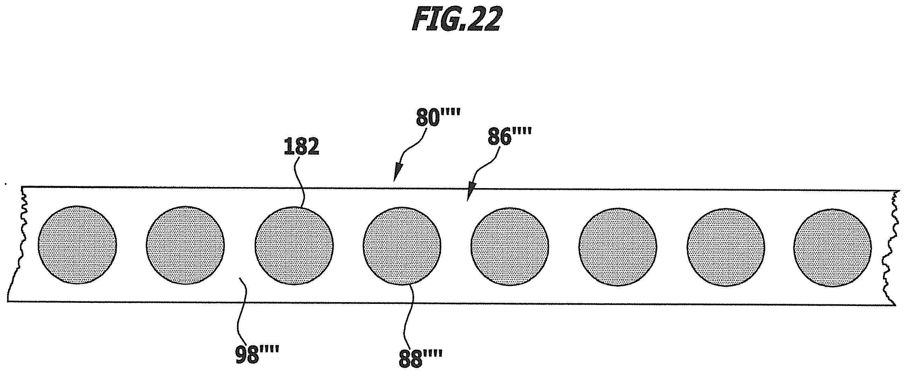

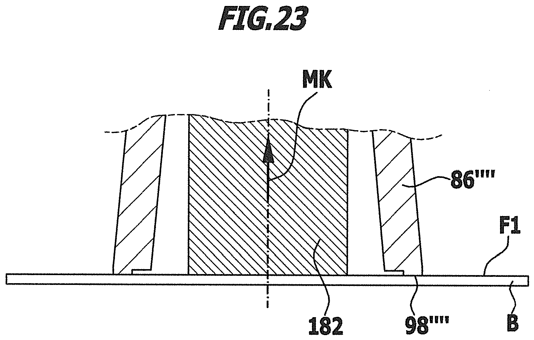

Bei einem fünften Ausführungsbeispiel einer erfindungsgemäßen Handhabungsvorrichtung 14"", ist die in den Fig. 22 und 23 lediglich dargestellte Halteeinheit 80"" so ausgebildet, dass die Halteleiste 86 nicht mit Saugkammern 92 aufweisenden Halteelementen 88 versehen ist, sondern mit Halteelementen 88"", die Magnete 182 aufweisen, so dass mit den Magneten 182 ein einseitiges Erfassen eines magnetisierbaren Biegeteils B auf einer Flachseite F1 möglich ist und dieses Biegeteil B dann durch magnetische Kräfte MK gegen die Anlagefläche 98"" kraftbeaufschlagt anzulegen.

Im Übrigen sind alle weiteren Elemente des fünften Ausführungsbeispiels der erfindungsgemäßen Handhabungsvorrichtung mit denen der ersten vier Ausführungsbeispiele identisch, so dass für dieselben Teile dieselben Bezugszeichen verwendet werden und ferner auch auf die Beschreibung zu diesen Ausführungsbeispielen vollinhaltlich Bezug genommen werden kann.

Bei einem weiteren, zeichnerisch nicht im Detail dargestellten Ausführungsbeispiel ist es auch denkbar, als Halteelemente 88 sowohl Saugkammer 92 als auch Magnete 182 einzusetzen.

## Patentansprüche

1. Handhabungsvorrichtung (14) zum Einlegen eines Biegeteils (B) in eine Biegevorrichtung (12) zum Biegen derselben um mindestens eine Biegekante (42 ,44), wobei mit der Handhabungsvorrichtung (14) das Biegeteil (B) zwischen einer Biegeteilaufnahmestellung auf einer Vorlagefläche (64) und einer Biegeteileinlegestellung der Biegevorrichtung (12) bewegbar ist, wobei die Handhabungsvorrichtung(14) eine in einer Längsrichtung (84) langgestreckt ausgebildete Halteeinheit (80) mit mindestens einem Halteelement (88) aufweist, mit welchem das auf der Vorlagefläche (64) angeordnete aufzunehmende Biegeteil (B) auf einer seiner Flachseiten (F) durch in der Längsrichtung (84) an mehreren aufeinanderfolgenden Orten einseitig auf die Flachseite (F) anziehend wirkende Kräfte (KS) erfassbar ist, und die Halteeinheit (80) ihrerseits um eine zur Längsrichtung (84) parallele erste Schwenkachse (104) relativ zu einer Schwenkträgereinheit (112) verschwenkbar ist, welche um eine zweite, parallel zur ersten Schwenkachse (104) verlaufende Schwenkachse (114) relativ zu einer Schwenkträgerbasis (116) verschwenkbar ist, wobei die Schwenkträgerbasis (116) mittels einer Trägerbasisbewegungseinheit (120) in Richtung quer zu der zweiten Schwenkachse (114) bewegbar ist,
**dadurch gekennzeichnet, dass** die Schwenkträgereinheit (112) mindestens zwei sich zu der ersten Schwenkachse (104) erstreckende Schwenkarme (144) aufweist, dass die Schwenkarme (144) starr miteinander verbunden sind, dass die Schwenkarme (144) durch einen sich zwischen diesen erstreckenden Einsatz (148) miteinander verbunden sind, und dass insbesondere der Einsatz (148) als eigensteifer Rahmen (172) ausgebildet ist, und dass insbesondere die Halteeinheit (80) mit mehreren in der Längsrichtung (84) aufeinanderfolgend angeordneten Schwenklagerstellen (152) an dem Einsatz (148) um die erste Schwenkachse (104) schwenkbar gelagert ist.

2. Handhabungsvorrichtung nach Anspruch 1, **dadurch gekennzeichnet, dass** die Halteeinheit (80) das aufzunehmende Biegeteil (B) an der Flachseite (F) in der Längsrichtung (84) an mehreren aufeinanderfolgenden Orten abstützt, dass insbesondere die Halteeinheit (80) eine sich in der Längsrichtung (84) streifenförmig erstreckende Anlagefläche (98) aufweist.

3. Handhabungsvorrichtung nach einem der voranstehenden Ansprüche, **dadurch gekennzeichnet, dass** die Halteeinheit (80) eine an der Flachseite (F) des aufzunehmenden Biegeteils (B) anlegbare Anlagefläche (98) aufweist, die von der ersten Schwenkachse (104) einen Abstand aufweist, der einen Bruchteil des Abstandes der ersten Schwenkachse (104) von der zweiten Schwenkachse (114) beträgt, und dass insbesondere die Halteeinheit (80) um die erste Schwenkachse (104) derart verschwenkbar ist, dass eine Anlagefläche (98) derselben in zwei um ungefähr 180° zueinander verschwenkte Stellungen jeweils parallel zu einer Mittelebene (M) der Schwenkträgereinheit (112) ausrichtbar ist.

4. Handhabungsvorrichtung nach einem der voranstehenden Ansprüche, **dadurch gekennzeichnet, dass** die Halteeinheit (80) innerhalb eines vorgegebenen Winkelbereichs in beliebigen Drehstellungen um die erste Schwenkachse (104) positionsgesteuert oder lagegeregelt positionierbar ist.

5. Handhabungsvorrichtung nach einem der voranstehenden Ansprüche, **dadurch gekennzeichnet, dass** die Halteeinheit (80) mehrere in der Längsrichtung (84) aufeinanderfolgend angeordnete Halteelemente (88) aufweist und dass insbesondere die Halteelemente (88) einzeln aktivierbar oder deaktivierbar sind.

6. Handhabungsvorrichtung nach einem der voranstehenden Ansprüche, **dadurch gekennzeichnet, dass** das mindestens eine Halteelement (88) auf die Flachseite (F) des Biegeteils (B) mit magnetischen Kräften wirkt, und/oder dass das mindestens eine Halteelement (88) auf die Flachseite (F) mit pneumatischen Saugkräften (SK) wirkt und insbesondere das Halteelement (88) mindestens eine Saugkammer (92) aufweist.

7. Handhabungsvorrichtung nach einem der voranstehenden Ansprüche, **dadurch gekennzeichnet, dass** die Bewegung der Schwenkträgerbasis (116) mit der Trägerbasisbewegungseinheit (120) positionsgesteuert oder lagegeregelt mit einer Maschinensteuerung (140) realisierbar ist.

8. Handhabungsvorrichtung nach einem der voranstehenden Ansprüche, **dadurch gekennzeichnet, dass** mit der Trägerbasisbewegungseinheit (120) mindestens eine Bewegung mit einer Komponente (126) in Richtung parallel zu einer Einlegeebene (E) der Biegevorrichtung (12) realisierbar ist, dass insbesondere die Trägerbasisbewegungseinheit (120) so ausgebildet ist, dass mit dieser mindestens eine lineare Bewegung quer zu der Biegekante (42, 44) realisierbar ist, und dass insbesondere die Trägerbasisbewegungseinheit (120) mindestens eine Linearführung (124) mit einem Führungsschlitten (132) umfasst.

9. Handhabungsvorrichtung nach einem der voranstehenden Ansprüche, **dadurch gekennzeichnet, dass** mit der Trägerbasisbewegungseinheit (120) mindestens eine Bewegung mit einer Komponente (134) in Richtung quer zur Einlegeebene (E) der Biegevorrichtung (12) realisierbar ist, dass insbesondere die Trägerbasisbewegungseinheit (120) so ausgebildet ist, dass mit dieser mindestens eine lineare Bewegung quer zu der Biegekante (42, 44) realisierbar ist, dass insbesondere die Trägerbasisbewegungseinheit (120) mindestens eine weitere Linearführung (136) mit einer Schlitteneinheit (138) umfasst.

10. Handhabungsvorrichtung nach einem der voranstehenden Ansprüche, **dadurch gekennzeichnet, dass** die Trägerbasisbewegungseinheit eine quer zu der zweiten Schwenkachse (114) verlaufende Drehachse (164) umfasst, um welche die Schwenkträgerbasis drehbar ist, und dass insbesondere die Drehachse (164) senkrecht zur Einlegeebene (E) verläuft, dass die Einlegeebene (E) im Wesentlichen parallel zu einer Einspannfläche (36, 38) der Einspannwerkzeuge (32, 34) verläuft.

11. Biegeanlage (10) umfassend eine Biegevorrichtung (12), welche zwei Einspannwerkzeuge (32, 34) sowie ein Biegewerkzeug (46) aufweist, welches zum Biegen relativ zu den Einspannwerkzeugen (32, 34) bewegbar ist, wobei insbesondere die Einspannwerkzeuge (32, 34) mit ihren Einspannflächen (36, 38) eine Einspannebene (E) festlegen und insbesondere die Biegevorrichtung (12) als Schwenkbiegevorrichtung ausgebildet ist, eine Vorlagevorrichtung (16) und eine Handhabungsvorrichtung (14), **dadurch gekennzeichnet, dass** mit der Handhabungsvorrichtung (14) ein Aufnehmen eines Biegeteils (B) von der Vorlagevorrichtung (16) sowie ein mehrfaches Einlegen des aufgenommenen Biegeteils (B) in die Biegevorrichtung (12) zum Umbiegen eines Teilbereichs des Biegeteils (B) erfolgt, und dass die Handhabungsvorrichtung (14) nach einem der voranstehenden Ansprüche ausgebildet ist.

12. Biegeanlage nach Anspruch 11, **dadurch gekennzeichnet, dass** mit der Biegevorrichtung (12) ein Biegen der Teilbereiche des Biegeteils (B) in zwei einander entgegengesetzte Biegerichtungen möglich ist.

13. Biegeanlage nach Anspruch 11 oder 12, **dadurch gekennzeichnet, dass** die Vorlagefläche (64) durch einen Vorlagetisch (62) der Vorlagevorrichtung (16) gebildet ist, dass insbesondere der Vorlagetisch (62) Anschlagelemente (66) für ein zuzuführendes rohes Biegeteil (B) aufweist, und dass insbesondere das Biegeteil (B) auf der Vorlagefläche (64) in mindestens zwei Raumrichtungen definiert positionierbar ist.

## Claims

1. Handling device (14) for inserting a part to be bent (B) into a bending device (12) for the bending thereof about at least one bending edge (42, 44), wherein with the handling device (14) the part to be bent (B) is movable between a receiving position for the part to be bent on a loading surface (64) and a bending device (12) insertion position for the part to be bent, wherein the handling device (14) has a holding unit (80) which is formed to be elongate in a longitudinal direction (84) and has at least one holding element (88) with which the part to be bent (B), which is to be received and is arranged on a loading surface (64), is grippable on one of its flat sides (F) by forces (KS) of attraction on one side of the flat side (F) at a plurality of successive locations in the longitudinal direction (84), and the holding unit (80) for its part is pivotable relative to a pivoting carrier unit (112) about a first pivot axis (104) parallel to the longitudinal direction (84), the pivoting carrier unit (112) being pivotable relative to a pivoting carrier base (116) about a second pivot axis (114) which extends parallel to the first pivot axis (104), wherein the pivoting carrier base (116) is movable by means of a carrier base moving unit (120) in a direction transverse to the second pivot axis (114),
**characterised in that** the pivoting carrier unit (112) has at least two pivot arms (144) extending to the first pivot axis (104), **in that** the pivot arms (144) are rigidly connected to one another, **in that** the pivot arms (144) are connected to one another by an insert (148) extending therebetween, and **in that** in particular the insert (148) is constructed as an inherently rigid frame (172), and **in that** in particular the holding unit (80) is pivotally mounted on the insert (148) about the first pivot axis (104) by means of a plurality of pivot bearing points (152) arranged successively in the longitudinal direction (84).

2. Handling device according to claim 1, **characterised in that** the holding unit (80) supports the part to be bent (B), which is to be received, on the flat side (F) at a plurality of successive locations in the longitudinal direction (84), **in that** in particular the holding unit (80) has a contact surface (98) extending in the form of a strip in the longitudinal direction (84).

3. Handling device according to any of the preceding claims, **characterised in that** the holding unit (80) has a contact surface (98) which is arranged to be applied to the flat side (F) of the part to be bent (B), which is to be received, the contact surface having a spacing from the first pivot axis (104) which is a fraction of the spacing of the first pivot axis (104) from the second pivot axis (114), and **in that** in particular the holding unit (80) is pivotable about the first pivot axis (104) such that a contact surface (98) thereof is orientatable in two positions pivoted at approximately 180° to one another in each case parallel to a central plane (M) of the pivoting carrier unit (112).

4. Handling device according to any of the preceding claims, **characterised in that** the holding unit (80) is positionable within a predetermined angle range in any rotational position about the first pivot axis (104) in a position-controlled or position-regulated manner.

5. Handling device according to any of the preceding claims, **characterised in that** the holding unit (80) has a plurality of holding elements (88) arranged successively in the longitudinal direction (84), and **in that** in particular the holding elements (88) can are individually activatable or deactivatable.

6. Handling device according to any of the preceding claims, **characterised in that** the at least one holding element (182) acts on the flat side (F) of the part to be bent (B) with magnetic forces, and/or **in that** the at least one holding element (88) acts on the flat side (F) with pneumatic suction forces (SK) and in particular the holding element (88) has at least one suction chamber (92).

7. Handling device according to any of the preceding claims, **characterised in that** the movement of the pivoting carrier base (116) is achievable in a position-controlled or position-regulated manner by means of the carrier base moving unit (120), using a machine control (140).

8. Handling device according to any of the preceding claims, **characterised in that** at least one movement with a component (126) in the direction parallel to an insertion plane (E) of the bending device (12) is achievable by means of the carrier base moving unit (120), **in that** in particular the carrier base moving unit (120) is configured such that therewith at least one linear movement is achievable transversely to the bending edge (42, 44), and **in that** in particular the carrier base moving unit (120) comprises at least one linear guide (124) having a guide carriage (132).

9. Handling device according to any of the preceding claims, **characterised in that** at least one movement with a component (134) in the direction transverse to the insertion plane (E) of the bending device (12) is achievable by means of the carrier base moving unit (120), **in that** in particular the carrier base moving unit (120) is configured such that therewith at least one linear movement is achievable transversely to the bending edge (42, 44), **in that** in particular the carrier base moving unit (120) comprises at least one further linear guide (136) having a carriage unit (138).

10. Handling device according to any of the preceding claims, **characterised in that** the carrier base moving unit comprises a rotation axis (164) running transversely to the second pivot axis (114), about which the pivoting carrier base is rotatable, and **in that** in particular the rotation axis (164) runs perpendicular to the insertion plane (E), **in that** the insertion plane (E) runs substantially parallel to a clamping surface (36, 38) of the clamping tools (32, 34).

11. Bending installation (10) comprising a bending device (12), which has two clamping tools (32, 34) and a bending tool (46), which is moveable relative to the clamping tools (32, 34) in order to bend, wherein in particular the clamping tools (32, 34) define a clamping plane (E) with their clamping surfaces (36, 38) and in particular the bending device (12) is configured as a pivoting bending device, a loading device (16) and a handling device (14), **characterised in that**, by means of the handling device (14), a part to be bent (B) is received by the loading device (16) and the received part to be bent (B) is inserted multiple times in the bending device (12) in order to bend a portion of the part to be bent (B), and **in that** the handling device (14) is constructed according to any of the preceding claims.

12. Bending installation according to claim 11, **characterised in that** bending of the portions of the part to be bent (B) in two opposing bending directions is possible by means of the bending device (12).

13. Bending installation according to either claim 11 or claim 12, **characterised in that** the loading surface (64) is formed by a feed table (62) of the loading device (16), **in that** in particular the feed table (62) has stop elements (66) for a blank part to be bent (B) to be fed, and **in that** in particular the part to be bent (B) is positionable in a defined manner on the loading surface (64) in at least two spatial directions.

## Revendications

1. Dispositif de manipulation (14) destiné à insérer une pièce à plier (B) dans un dispositif de pliage (12) pour plier celle-ci selon au moins une arête de pliage (42, 44), dans lequel avec le dispositif de manipulation (14) la pièce à plier (B) peut être déplacée entre une position de réception de pièce à plier sur une surface de présentation (64) et une position d'insertion de pièce à plier du dispositif de pliage (12), dans lequel le dispositif de manipulation (14) présente une unité de retenue (80) conçue allongée dans une direction longitudinale (84) avec au moins un élément de retenue (88), avec lequel la pièce à plier (B) à recevoir agencée sur la surface de présentation (64) peut être saisie sur l'un de ses côtés plats (F) par une force agissant par attraction (KS) dans la direction longitudinale (84) en plusieurs emplacements se succédant d'un côté sur le côté plat (F), et l'unité de retenue (80) de son côté peut être pivotée autour d'un premier axe de pivotement (104) parallèle à la direction longitudinale (84) par rapport à une unité de support de pivotement (112), laquelle peut être pivotée autour d'un second axe de pivotement (114) s'étendant parallèlement au premier axe de pivotement (104) par rapport à une base de support de pivotement (116), dans lequel la base de support de pivotement (116) peut être déplacée au moyen d'une unité de déplacement de base de support (120) dans une direction transversale au second axe de pivotement (114),
**caractérisé en ce que** l'unité de support de pivotement (112) présente au moins deux bras de pivotement (144) s'étendant vers le premier axe de pivotement (104), **en ce que** les bras de pivotement (144) sont reliés les uns aux autres de façon rigide, **en ce que** les bras de pivotement (144) sont reliés les uns aux autres par un insert (148) s'étendant entre ceux-ci, et **en ce qu'**en particulier l'insert (148) est conçu en tant que cadre (172) rigidifié, et **en ce qu'**en particulier l'unité de retenue (80) est montée de façon pivotante avec plusieurs emplacements de palier de pivotement (152) agencés en succession dans la direction longitudinale (84) contre l'insert (148) autour du premier axe de pivotement (104).

2. Dispositif de manipulation selon la revendication 1, **caractérisé en ce que** l'unité de retenue (80) soutient la pièce à plier (B) à recevoir contre le côté plat (F) dans la direction longitudinale (84) en plusieurs emplacements se succédant, **en ce qu'**en particulier l'unité de retenue (80) présente une surface d'appui (98) s'étendant en forme de bande dans la direction longitudinale (84).

3. Dispositif de manipulation selon l'une des revendications précédentes, **caractérisé en ce que** l'unité de retenue (80) présente une surface d'appui (98) pouvant être appliquée contre le côté plat (F) de la pièce à plier (B) à recevoir, laquelle surface d'appui présente depuis le premier axe de pivotement (104) un espacement qui représente une fraction de l'espacement entre le premier axe de pivotement (104) et le second axe de pivotement (114), et **en ce qu'**en particulier l'unité de retenue (80) peut être pivotée autour du premier axe de pivotement (104) de telle sorte qu'une surface d'appui (98) de celle-ci puisse être orientée dans deux positions pivotées d'environ 180° l'une par rapport à l'autre respectivement en parallèle à un plan médian (M) de l'unité de support de pivotement (112).

4. Dispositif de manipulation selon l'une des revendications précédentes, **caractérisé en ce que** l'unité de retenue (80) peut être positionnée par commande de position ou régulation de position à l'intérieur d'une plage angulaire prédéfinie dans des positions de rotation au choix autour du premier axe de pivotement (104).

5. Dispositif de manipulation selon l'une des revendications précédentes, **caractérisé en ce que** l'unité de retenue (80) présente plusieurs éléments de retenue (88) agencés successivement dans la direction longitudinale (84) et **en ce qu'**en particulier les éléments de retenue (88) peuvent être activés ou désactivés individuellement.

6. Dispositif de manipulation selon l'une des revendications précédentes, **caractérisé en ce que** le au moins un élément de retenue (88) agit avec des forces magnétiques sur le côté plat (F) de la pièce à plier (B), et/ou **en ce que** le au moins un élément de retenue (88) agit avec des forces d'aspiration (SK) pneumatiques sur le côté plat (F) et en particulier l'élément de retenue (88) présente au moins une chambre d'aspiration (92).

7. Dispositif de manipulation selon l'une des revendications précédentes, **caractérisé en ce que** le déplacement de la base de support de pivotement (116) peut être réalisé avec l'unité de déplacement de base de support (120) par commande de la position ou régulation de position avec une commande de machine (140).

8. Dispositif de manipulation selon l'une des revendications précédentes, **caractérisé en ce qu'**avec l'unité de déplacement de base de support (120) au moins un déplacement avec une composante (126) dans une direction parallèle à un plan d'insertion (E) du dispositif de pliage (12) peut être réalisé, **en ce qu'**en particulier l'unité de déplacement de base de support (120) est conçue de telle sorte qu'avec celle-ci au moins un déplacement linéaire transversal à l'arête de pliage (42, 44) peut être réalisé, et **en ce qu'**en particulier l'unité de déplacement de base de support (120) comprend au moins un guidage linéaire (124) avec un coulisseau de guidage (132).

9. Dispositif de manipulation selon l'une des revendications précédentes, **caractérisé en ce qu'**avec l'unité de déplacement de base de support (120) au moins un déplacement avec une composante (134) dans une direction transversale au plan d'insertion (E) du dispositif de pliage (12) peut être réalisé, **en ce qu'**en particulier l'unité de déplacement de base de support (120) est conçue de telle sorte qu'avec celle-ci au moins un déplacement linéaire transversal à l'arête de pliage (42, 44) peut être réalisé, **en ce qu'**en particulier l'unité de déplacement de base de support (120) comprend au moins un autre guidage linéaire (136) avec une unité de coulisseau (138).

10. Dispositif de manipulation selon l'une des revendications précédentes, **caractérisé en ce que** l'unité de déplacement de base de support comprend un axe de rotation (164) s'étendant transversalement au second axe de pivotement (114), axe de rotation autour duquel la base de support de pivotement peut tourner, **en ce qu'**en particulier l'axe de rotation (164) s'étend perpendiculairement au plan d'insertion (E), **en ce que** le plan d'insertion (E) s'étend essentiellement parallèlement à une surface de serrage (36, 38) des outils de serrage (32, 34).

11. Installation de pliage (10) comprenant un dispositif de pliage (12), lequel présente deux outils de serrage (32, 34) ainsi qu'un outil de pliage (46), lequel peut être déplacé relativement aux outils de serrage (32, 34) pour le pliage, dans laquelle en particulier les outils de serrage (32, 34) immobilisent un plan d'insertion (E) avec leurs surfaces de serrage (36, 38) et en particulier le dispositif de pliage (12) est conçu en tant que dispositif de pliage pivotant, un dispositif de présentation (16) et un dispositif de manipulation (14), **caractérisée en ce qu'**avec le dispositif de manipulation (14) une réception d'une pièce à plier (B) par le dispositif de présentation (16) ainsi qu'une insertion multiple de la pièce à plier (B) reçue dans le dispositif de pliage (12) s'effectuent pour rabattre une zone partielle de la pièce à plier (B), et **en ce que** le dispositif de manipulation (14) est conçu selon l'une des revendications précédentes.

12. Installation de pliage selon la revendication 11, **caractérisée en ce qu'**avec le dispositif de pliage (12) un pliage des zones partielles de la pièce à plier (B) est possible dans deux directions de pliage opposées l'une à l'autre.

13. Installation de pliage selon la revendication 11 ou 12, **caractérisée en ce que** la surface de présentation (64) est formée par une table de présentation (62) du dispositif de présentation (16), **en ce qu'**en particulier la table de présentation (62) présente des éléments de butée (66) pour une pièce à plier (B) brute à amener, et **en ce qu'**en particulier la pièce à plier (B) peut être positionnée de façon définie sur la surface de présentation (64) dans au moins deux directions spatiales.
